(19) Europäisches Patentamt
European Patent Office
Office européen des brevets

(11) **EP 1 606 675 B1**

(12) **EUROPÄISCHE PATENTSCHRIFT**

(45) Veröffentlichungstag und Bekanntmachung des Hinweises auf die Patenterteilung:
**24.10.2012 Patentblatt 2012/43**

(21) Anmeldenummer: **04721870.6**

(22) Anmeldetag: **19.03.2004**

(51) Int Cl.:
*G05B 19/404* *(2006.01)*   *H02P 8/32* *(2006.01)*

(86) Internationale Anmeldenummer:
**PCT/EP2004/002900**

(87) Internationale Veröffentlichungsnummer:
**WO 2004/083968 (30.09.2004 Gazette 2004/40)**

(54) **VERFAHREN UND VORRICHTUNG ZUM VERSTELLEN EINES ELEMENTS**

METHOD AND DEVICE FOR ADJUSTING AN ELEMENT

PROCEDE ET DISPOSITIF DE REGLAGE D'UN ELEMENT

(84) Benannte Vertragsstaaten:
**DE FR GB IT**

(30) Priorität: **21.03.2003 DE 10312644**

(43) Veröffentlichungstag der Anmeldung:
**21.12.2005 Patentblatt 2005/51**

(73) Patentinhaber: **Olympus Soft Imaging Solutions GmbH**
**48149 Münster (DE)**

(72) Erfinder: **BAIGAR, Erik**
**87616 Marktoberdorf (DE)**

(74) Vertreter: **Jordan, Volker Otto Wilhelm et al**
**Postfach 860 820**
**81635 München (DE)**

(56) Entgegenhaltungen:
**WO-A1-97/38361    US-A- 4 782 277**
**US-B1- 6 285 155**

• **PATENT ABSTRACTS OF JAPAN Bd. 009, Nr. 049 (E-300), 2. März 1985 (1985-03-02) & JP 59 188395 A (TOKYO DENKI KK), 25. Oktober 1984 (1984-10-25)**

**Beschreibung**

Die Erfindung betrifft ein Verfahren nach dem Oberbegriff von Anspruch 1, sowie eine Vorrichtung nach dem Oberbegriff von Anspruch 19.

Im Fachgebiet sind diverse Verfahren und Vorrichtungen zum Verstellen eines Elements bekannt. Es ist beispielsweise auf die DE 100 05 611 A1 und die WO 01/59531 A2 sowie den darin angesprochenen Stand der Technik verwiesen.

Für viele Anwendungen ist eine geregelte Verstellung des Elements mittels des Aktuators üblich bzw. zweckmäßig. Betreffend den Aktuator wird vor allem an einen elektromagnetischen Aktuator oder "Galvanometer-Aktuator" gedacht, also an jede elektromechanische Einrichtung, die als Aktuator zum Verstellen bzw. Positionieren eines Elements einsetzbar ist und hierzu von einem Stromfluss oder von mehreren Stromflüssen erzeugte magnetische Felder benutzt, ggf. in Kombination mit von einem oder mehreren Permanentmagneten erzeugten magnetischen Feldern.

Bei manchen Anwendungen machen Schwingungen der Einheit aus Aktuator und Element um eine einer jeweiligen Ruhe-Verstellposition entsprechende Mittelposition Probleme. Diesbezüglich hat es sich im Fachgebiet bewährt, die Verstellung nach einer Verstellrampe vorzunehmen und hierbei schon in hinreichend weitem Abstand vor der einzustellenden Zielposition die Verstellbewegung allmählich abzubremsen, so dass möglichst keine Schwingungen oder nur Schwingungen mit geringer Schwingungsamplitude durch das Abbremsen induziert werden. Entsprechendes gilt für den Beginn des Verstellvorgangs, also für das Inbewegungsetzen des Elements ausgehend von der Ausgangsposition.

Durch ein derartiges frühzeitiges Abbremsen bzw. langsames Beschleunigen des Elements durch den Aktuator werden allerdings die Stellzeiten, also die Zeit, die für die Verstellung des Elements von der Ausgangsposition in die Zielposition benötigt wird, vergrößert. Dies ist für manche Anwendungen nachteilig oder hinsichtlich einer relevanten Performance limitierend.

Ein Verfahren nach dem Oberbegriff von Anspruch 1 und eine entsprechende Vorrichtung ist aus der Druckschrift JP 59-188395 A bekannt. Zur Unterdrückung von Vibrationen eines Schrittmotors, der durch synchrone Antriebsimpulse Q5-Q24 betrieben wird, wird auf die Abgabe eines letzten Antriebsimpulses Q24 an den Schrittmotor nach einer definierten Zeit t4 in der unmittelbaren Nähe einer maximalen Überschwingweite ein finaler Stoppimpuls Q25 derart zugeführt, dass der Schrittmotor ohne wesentliches Überschwingen stoppt.

Die Druckschrift US 4,782,277 A offenbart ein Verfahren zum Betreiben und Steuern eines Schrittmotors. Der bekannte Schrittmotor hat N stationäre Feldpole entsprechend N Phasen (N ist eine ganze Zahl größer oder gleich 4), wobei die genannten stationären Feldpole nacheinander für m Schritte (m ist eine ganze Zahl größer oder gleich 2) derart angeregt werden, dass eine Anzahl von n Phasen gleichzeitig angeregt werden, wobei n von 1 bis N-2 reicht. Die stationären Feldpole werden nacheinander gleichzeitig durch n Phasen bis zum (m-1)-ten Schritt angeregt. Nach Abschluss der Erregung der stationären Feldpole im (m-1)-ten Schritt werden die stationären Feldpole in Bezug auf eine Anzahl von Phasen größer als n bis zu einem gewünschten Wert zwischen den Stabilitätspunkten des (m-1)-ten und des m-ten Schritts angeregt. Der Schrittmotor wird auf diese Weise so gesteuert, dass ein Wert kleiner als der des Stabilitätspunktes des letzten (m-ten) Schritts angesteuert wird unmittelbar bevor der Schrittmotor in den letzten Schritt getrieben wird, so dass der Schrittmotor gebremst wird, während er gedämpft wird wegen der größeren Anzahl von Phasen, über die die stationären Feldpole angeregt werden. Auf diese Art wird ein Überschwingen von vornherein vermieden.

Aus der Druckschrift US 6,285,155 B1 ist ein Verfahren zum Betreiben eines Schrittmotors mit Rastmoment bekannt. Der Schrittmotor umfasst eine Mehrzahl von Windungen und einen magnetisierten Rotor. Die Windungen des Schrittmotors werden dabei einzeln angeregt, um den Rotor aus einer momentanen Schrittposition in eine der momentanen Schrittposition benachbarten Schrittposition zu rotieren. Dazu werden ausgewählte Windungen für eine festgelegte Zeit mit Strömen festgelegter Stromstärken derart angeregt, dass der entstehende magnetische Feldvektor nicht in Richtung der Schrittposition ausgerichtet ist. Genannte festgelegte Schrittzeiten und festgelegte Stromstärken wurden derart bestimmt, dass es dem Rotor möglich ist, die benachbarte Schrittposition ohne wesentliches Überschwingen und einer Geschwindigkeit, welche im Wesentlichen gleich Null ist, zu erreichen, wenn die Schrittzeit abgelaufen ist. Danach werden die Windungen abgeregt und der Rotor wird vom Schrittmotorrastmoment in der benachbarten Schrittposition gehalten. Überschwinger werden somit ebenfalls von vornherein vermieden.

Die Erfindung geht speziell aus von einem Verfahren zum Verstellen eines Elements und einer Vorrichtung zum Verstellen eines Elements, bei denen Lademassen auf das Element zugeladen werden bzw. zuladbar sind bzw. eine momentane Zuladung auf dem Element durch Entnahme oder Austausch oder Zuladen wenigstens einer Lademasse geändert wird oder änderbar ist. Es wird dabei beispielsweise an ein mittels eines Dreh-Aktuators auf Grundlage einer Ansteuerung durch eine Steuereinheit verstellbares Filterrad gedacht, bei dem die Filter austauschbar und somit die Zuladung veränderbar ist. Ausgehend von einem solchen Verfahren bzw. einer solchen Vorrichtung liegt der Erfindung die Aufgabe zugrunde, kurze Stellzeiten des Elements zu ermöglichen.

Zur Lösung dieser Aufgabe wird erfindungsgemäß das Verfahren mit den Merkmalen des Anspruchs 1 und die Vorrichtung mit den Merkmalen des Anspruchs 19 bereitgestellt.

Durch die zweistufige Verstellung des Elements ausgehend von der Ausgangsposition über die Interimsposition in die Zielposition kann in dem System enthaltene Schwingungsenergie, die in Form einer Schwingung des Elements um die der Interimsposition entsprechende Mittelposition auftritt, teilweise oder - idealerweise - mehr oder weniger vollständig dem System entzogen werden, so dass dann nach Erreichen der Zielposition keine oder höchstens nur noch eine geringe Schwingung um die dann der Zielposition entsprechende Mittelposition auftritt. Auf Grundlage dieser vorteilhaften Möglichkeit des Schwingungsenergieentzugs ist die Vermeidung oder das Kleinhalten von auftretenden Schwingungen nun nicht mehr begrenzend hinsichtlich der Maximierung der Stellzeit für die Verstellung zwischen der Ausgangsposition und der Zielpositon. Man kann deswegen vorsehen, dass der Akuator zu Beginn des Verstellvorgangs das zu verstellende Element maximal beschleunigt und zum Ende des Verstellvorgangs, im Hinblick auf das Erreichen der Interimspositon, das Verstellelement maximal abbremst. Auch für die Verstellung von der Interimsposition in die Zielposition kann mit maximal möglicher Beschleunigung bzw. Abbremsung, vorzugsweise in der Art eines Verstellimpulses, also einer ruckartigen Verstellung, gearbeitet werden.

Die Charakterisierung der Interimsposition als "benachbart" zur Zielposition soll ausdrücken, dass die Interimsposition sich in einer gewissen Nähe, auf der Größenordnungsskala der Schwingungsamplitude der Schwingung des Elements, befindet. Es soll hierdurch keinesfalls ausgedrückt werden, dass etwa in dem Falle, dass für das Element eine Mehrzahl von Nutzpositionen (entsprechend etwa Filterpositionen eines Filterhalters) vorgesehen sind, die Interimsposition unbedingt einer dieser Nutzpositionen entsprechen muss. In der Regel wird die Interimsposition gegenüber den Abständen zwischen den Nutzpositionen in deutlich engerer Nähe zur Zielposition liegen. Ferner soll der Begriff "benachbart" keinesfalls ausdrücken, dass im Falle eines als Schrittmotor ausgeführten Aktuators die Interimsposition unbedingt exakt einen Mikroschritt des Schrittmotors von der Zielpositon beabstandet ist. In der Regel wird die Interimsposition vielmehr eine von den Umständen abhängige Anzahl von Mikroschritten von der Zielpositon entfernt sein. Allgemein ist es so, dass dann, wenn mittels des Aktuators gewisse Zwischenpositionen anfahrbar sind, diese auch als Interimsposition in Betracht kommen.

Vorteilhafte Ausgestaltungen und Weiterbildungen des erfindungsgemäßen Verfahrens bzw. der erfindungsgemäßen Vorrichtung ergeben sich aus den Unteransprüchen. Es wird vor allem daran gedacht, auf die erfindungsgemäße Weise einen Filterhalter, vorzugsweise ein Filterrad, mit mehreren optischen Filtern zu verstellen. Als Aktuator ist vorzugsweise ein Schrittmotor vorgesehen. Betreffend den Aktuator wird vor allem, aber nicht ausschließlich, an einen Dreh-Aktuator, ggf. Dreh-Schrittmotor, gedacht. Die in den Ansprüchen angesprochene Orientierung kann zweckmäßig als Vorzeichen dargestellt werden.

Die Erfindung wird im Folgenden anhand von Ausführungsbeispielen erläutert, wobei auf die die Ausführungsbeispiele repräsentierenden bzw. bestimmte Aspekte der Ausführungsbeispiele illustrierenden bzw. exemplifizierenden Figuren Bezug genommen wird.

Fig. 1      zeigt in einer als Abbildung 1 bezeichneten Draufsicht ein bevorzugtes Ausführungsbeispiel eines als drehbares Filterrad ausgeführten Filterhalters für optische Filter.

Fig. 2      zeigt zwei als Abbildung 2 und Abbildung 3 bezeichnete Diagramme, die sich auf ein erstes Ausführungsbeispiel beziehen.

Fig. 3      zeigt mehrere Gleichungen bzw. Ungleichungen, die sich auf ein mathematisches Modell im Zusammenhang mit dem ersten Ausführungsbeispiel beziehen und als Gleichung 1, Gleichung 2, Gleichung 3, Gleichung 3a und Gleichung 3b angesprochen werden.

Fig. 4      zeigt zwei als Abbildung 4 bezeichnete Diagramme, die sich auf das erste Ausführungsbeispiel beziehen.

Fig. 5      zeigt zwei als Abbildung 5 bezeichnete Diagramme, die sich auf das erste Ausführungsbeispiel beziehen.

Fig. 6      zeigt zwei als Abbildung 6 bezeichnete Diagramme, die sich auf das erste Ausführungsbeisiel beziehen.

Fig. 7      zeigt zwei als Abbildung 7 bezeichnete Diagramme, die sich auf das erste Ausführungsbeispiel beziehen.

Fig. 8      zeigt zwei Beispieldaten enthaltende, als Tabelle 1 und Tabelle 2 bezeichnete Tabellen, die sich auf das erste Ausführungsbeispiel beziehen.

Fig. 9      zeigt zwei als Abbildung 8 bezeichnete Diagramme, die sich auf das erste Ausführungsbeispiel beziehen.

Fig. 10      zeigt eine als Abbildung 9 bezeichnetes Diagramm, das sich auf das erste Ausführungsbeispiel bezieht.

Fig. 11      zeigt schematisch in einer Seitenansicht (Teilfigur 11a) und in einer Draufsicht (Teilfigur 11 b) ein mittels eines als Aktuator dienenden Motors verdrehbares scheibenförmiges Element (beispielsweise entsprechend dem Filterrad der Fig. 1). Das zweite Ausführungsbeispiel bezieht sich auf die Aktuator-Element-Anordnung der Fig. 11.

Fig. 12      zeigt in der Teilfigur 12a) ein Geschwindigkeits-Zeit-Diagramm und in Fig. 12b) ein Positions-Zeit-Diagramm zur Erläuterung von Nachteilen des Standes der Technik bzw. Vorteilen der Erfindung.

Fig. 13, 14 erläutern anhand der Teilfiguren 13a), 13b), 14a) und 14b) Nachteile des Standes der Technik bzw. Vorteile nach der Erfindung am Bild eines harmonischen Oszillators.

Fig. 15, 16 dienen zur Veranschaulichung eines erfindungsgemäßen Verstellvorgangs am Bild eines harmonischen Oszillators.

## 1. Ausführungsbeispiel:

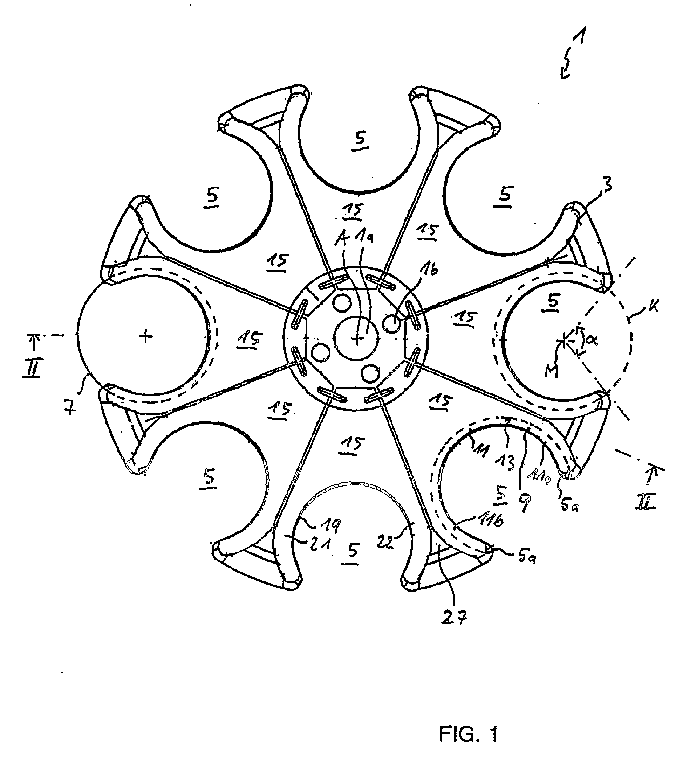

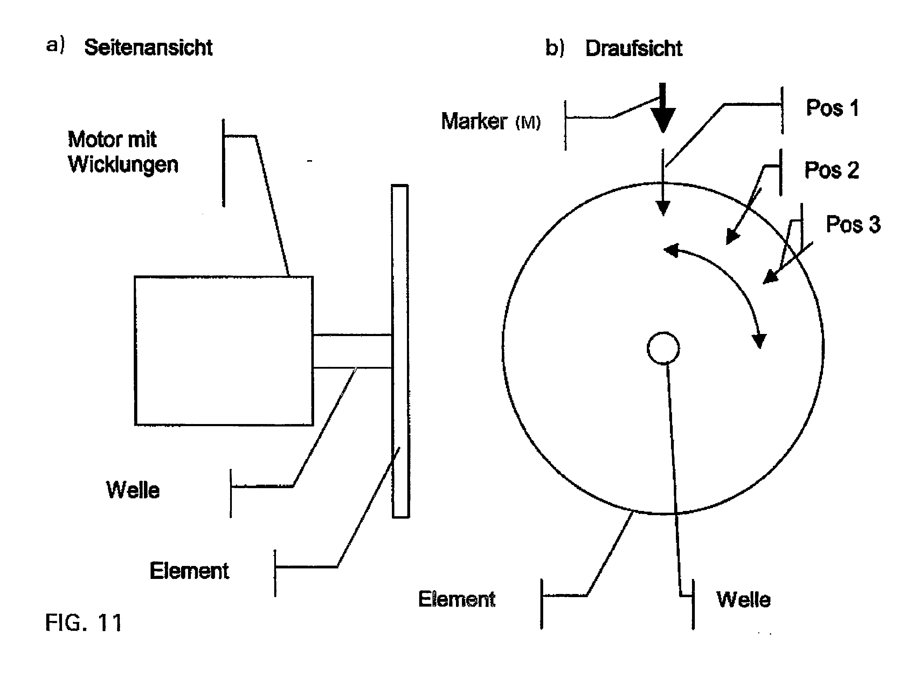

In einer Lichtquelle für mikroskopische, insbesondere Fluoreszenzmikroskopische Anwendungen werden zum Umschalten zwischen verschiedenen Farben verschiedene Filter in einen optischen Strahlengang eingebracht. Das geschieht mittels einer Scheibe, in die bis zu 8 Filter eingesetzt werden. Es wird hierzu auf die deutsche Patentanmeldung 102 44 720.9 der Anmelderin Olympus BioSystems GmbH vom 25.09.2002 und die hierzu eingereichte deutsche Patent-Nachanmeldung 103 10 603.0 der gleichen Anmelderin vom 11.03.2003, beide mit dem Titel "Filterhalter" verwiesen. Die Offenbarung dieser Anmeldungen wird durch Bezugnahme vollständig in die Offenbarung der vorliegenden Anmeldung einbezogen. Gemäß einer bevorzugten Ausführungsform, von der hier ausgegangen wird, ist die Scheibe auf einem Schrittmotor drehbar gelagert (siehe **ABBILDUNG 1** in Fig. 1 und Fig.11).

Im folgenden werden beispielhaft theoretische Überlegungen zur Unterdrückung von mechanischen Torsionsschwingungen des Filterrades beschrieben. Als konkretes Beispiel wird ein im Folgenden auch als "MT20" angesprochener Prototyp einer die Lichtquelle und das Filterrad aufweisenden Hardware der Anmelderin Olympus BioSystems GmbH herangezogen. Die genannten Zahlenwerte beziehen sich stets auf dieses Beispiel. In künftigen Serienprodukten könnte das Filterrad wesentlich leichter als hier angenommen sein, so dass mit anderen Trägheitsmomenten zu rechnen wäre. In Betracht kommt auch, zusätzlichen einen mechanischen Schwingungsdämpfers vorzusehen, so dass eine andere Dämpfungskonstante anzusetzen wäre. Es würden sich hieraus aber keine prinzipiellen Änderungen an den Rechnungen und theoretischen Überlegungen ergeben.

Alle im Folgenden angegebenen Rechnungen und Formeln gelten allgemein und im Falle der Anwendung von Näherungen wird konkret darauf hingewiesen. Es wird im Folgenden ferner auch ein Verfahren bzw. ein Algorithmus zur Schwingungsunterdrückung angegeben und in diesem Zusammenhang ein bevorzugte Art und Weise einer erfindungsgemäßen Implementierung des Verfahrens erläutert. Eine bevorzugte Implementierung lässt sich charakterisieren durch Angabe von:

• was passiert EINMAL bei der Entwicklung/Fierstellung einer entsprechenden Anordnung,
• was passiert beim Einschalten oder bei Änderung der Filter-Zuladung und

• was passiert bei jeder Bewegung des Filterrades.

## Schrittmotor und Filterrad als schwingfähiges System:

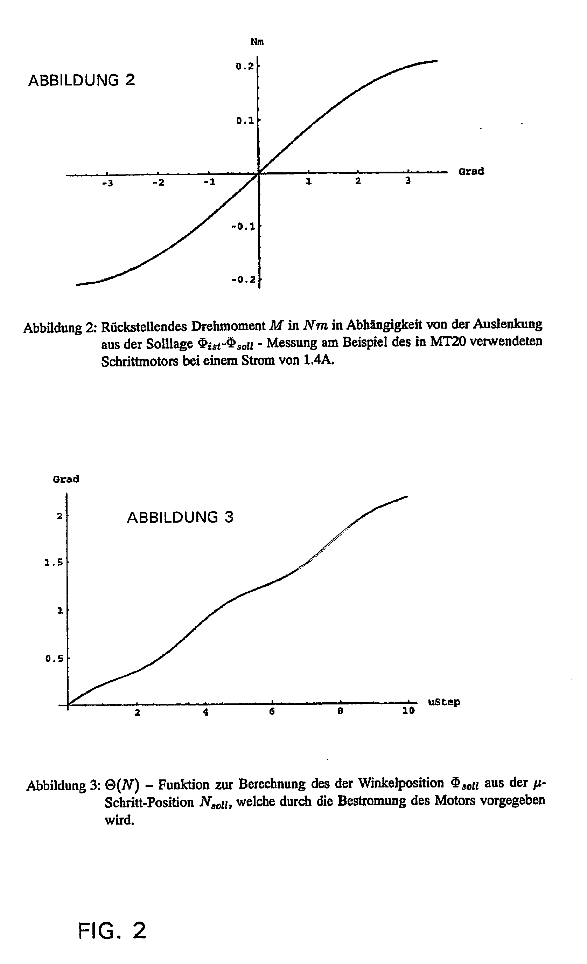

Der Anker mit aufgesetztem, starr verbundenem Filterrad wird durch das im bestromten Motor aufgebaute Magnetfeld in eine Soll-Position $\Phi_{soll}$ gezogen. **ABBILDUNG 2** in Fig. 2 zeigt das Drehmoment, das ausgeübt wird, wenn man versucht den Anker mit Filterrad aus dieser Ruhelage in eine Position $\Phi_{ist}$ auszulenken. Bei dem hier zugrundegelegten konkreten Beispiel ist das Drehmoment abhängig vom Strom und auch von der Betriebsart des Motors (d.h. auf welchem $\mu$-Schritt der Motor gerade steht). Da die Abweichungen im Bereich von unter $\pm 10\%$ liegen, kann mit dem vorliegenden, mittleren Drehmoment gerechnet werden.

Lässt man den ausgelenkten Anker plötzlich los, so treten Schwingungen auf, die nach einer gewissen Zeit abklingen. Die Näherung eines harmonischen Oszillators ist im vorliegenden Fall bei Auslenkungen von mehr als 2° nicht mehr zulässig. Bei größeren Auslenkungen nimmt das Drehmoment wieder ab bis es bei $\pm 7.2°$ Null erreicht und das System nicht mehr in seine Ruhelage zurückkehrt, sondern in der nächsten Position bei $\pm 14.4°$ einrastet.

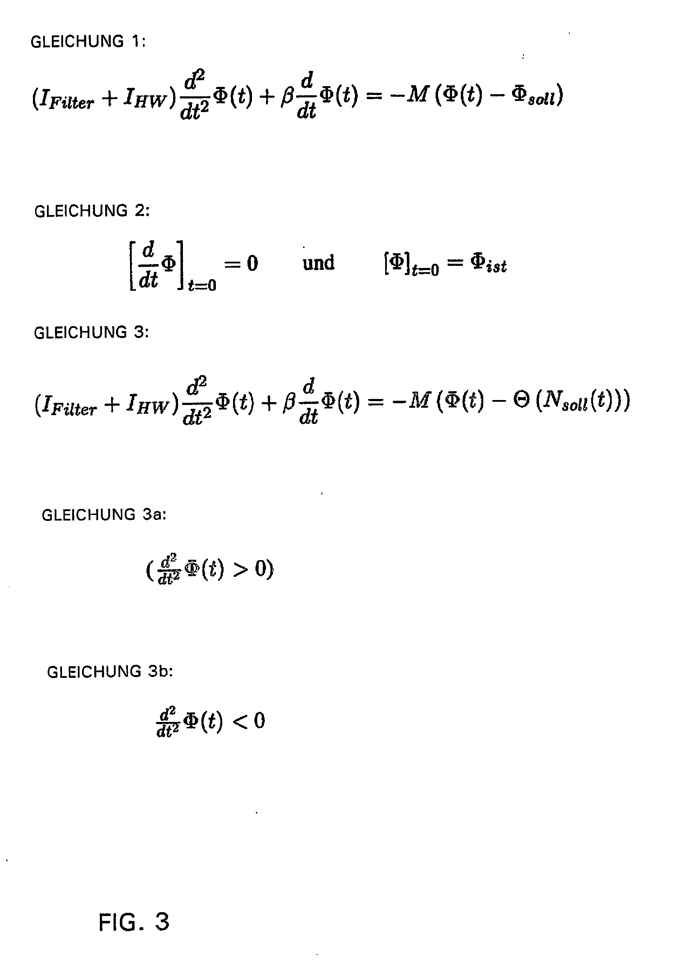

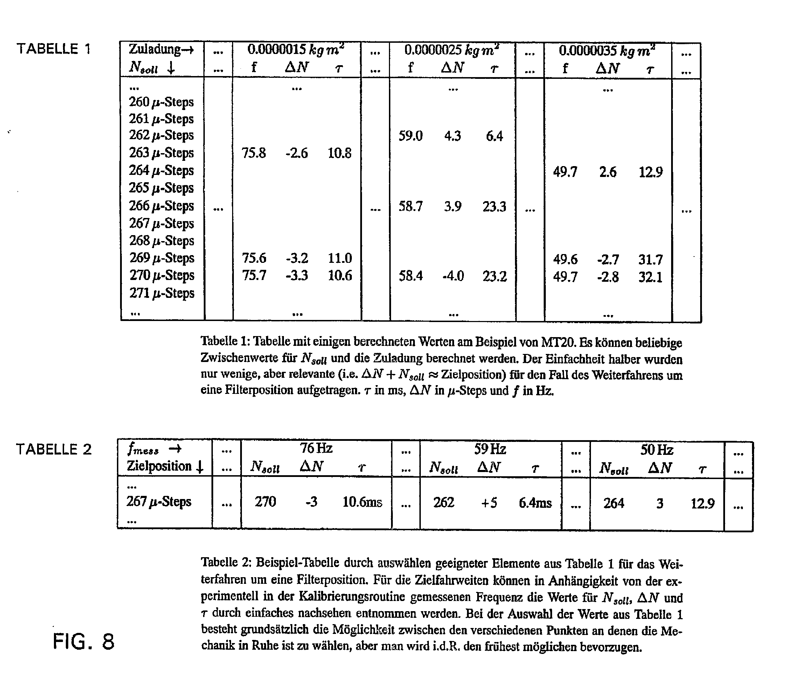

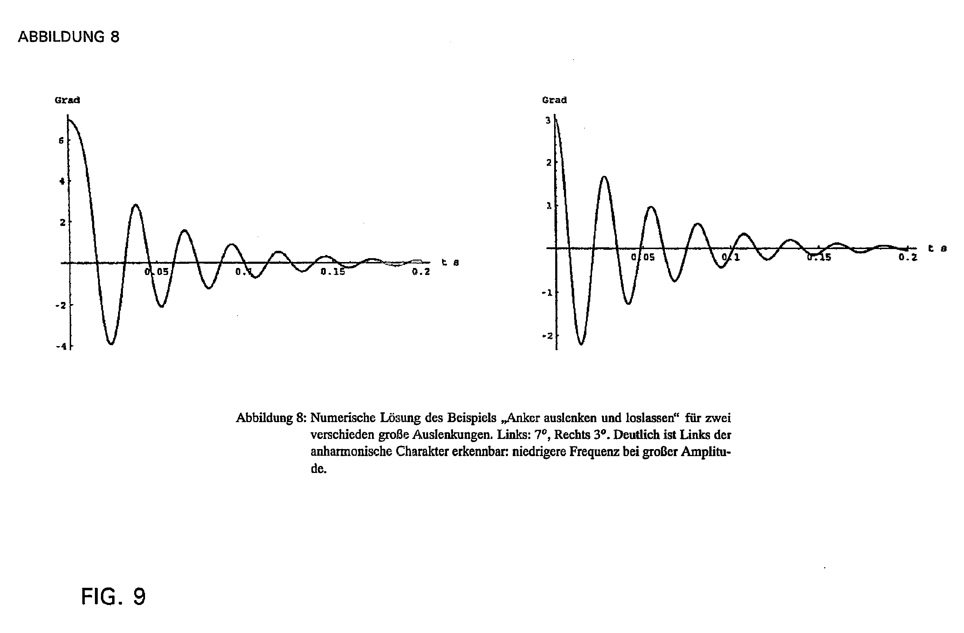

Anker und leeres Filterrad haben zusammen ein Trägheitsmoment $I_{HW}$ von $0.0000015\ kgm^2$ und hinzu kommt noch ein variables Trägheitsmoment der Filter $I_{Filler}$ von $0\ kgm^2$ bis $0.0000025\ kgm^2$, je nach aktueller Bestückung mit Filtern (ein bei Versuchen verwendeter Filterdummy hatte ein Gewicht von 3.2 g). Es gilt mithin als Bewegungsgleichung (Differentialgleichung 2. Ordnung, Gleichung eines gedämpften, anharmonischen Oszillators), der das System gehorcht, GLEICHUNG 1 in Fig. 3, wobei $\beta$ die Dämpfung der Schwingung durch Reibung an Luft und in den Lagern beschreibt, und als Anfangsbedingungen für das obige Beispiel des Loslassens eines ausgelenkten Ankers zum Zeitpunkt t=0 die Bedingungen gemäß GLEICHUNG 2 in Fig. 3 gelten. Numerische Lösungen dieses Systems sind in ABBILDUNG 8 in Fig. 9 gezeigt, für die folgenden Parameter:

$$\beta = 0.00006\ kgm^2/s$$

$$I_{tot} = 0.0000015 kgm^2$$

## Entstehung von Schwingungen im praktischen Betrieb:

In der praktischen Anwendung werden Schwingungen insbesondere dann induziert, wenn das Filterrad durch den Motor bewegt wird. In diesem Fall ist die Soll-Position $\Phi_{soll}$ selbst zeitabhängig. Es ist dementsprechend anzusetzen: $\Phi_{soll}(t)$

$\Phi_{soll}(t)$ wird von außen vorgegeben (im hier zugrundegelegten Fall eines Schrittmotors: Stellen, *kein* Regeln wie bei DC-Servomotoren) indem der Motor entsprechend bestromt wird. Das Variieren der Sollposition kann dabei je nach zur Verfügung stehender Hardware in voll-, halb- oder μ-Schritten erfolgen. Modelliert wird das durch eine Funktion $\Theta(N)$, welche einer Schrittposition $N$ einen Winkel zuordnet. Während voll- und Halbschritte i.d.R. strikt gleich groß sind, können μ-Schritte leicht variierende Größen haben. Ursache ist der nichtlineare Charakter bei der Erzeugung des Magnetfeldes (Sättigung der Magnetisierung).

ABBILDUNG 3 in Fig. 2 zeigt die Funktion $\Theta$ im vorliegenden Fall von 1600 μ-Schritten pro Umdrehung. Die verschiede Größe der μ-Schritte manifestiert sich im wellenartigen Ansteigen der Kurve.

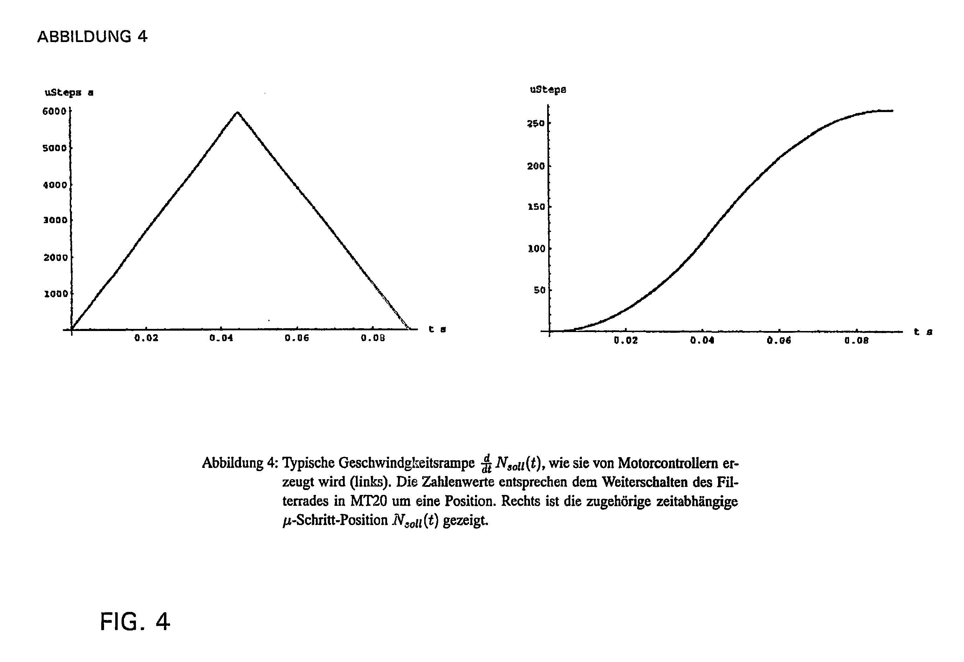

Stand der Technik ist die Verwendung eines intelligenten Motorcontrollers, welcher - einmal programmiert - selbständig den Motor von einer Position $N_1$ zu einer Position $N_2$ bewegt. Dabei werden verschiedene Rampen benutzt - eine der häufigsten Formen ist die konstante Beschleunigung gefolgt von einer Phase konstanter Geschwindigkeit und wieder konstantem Verzögern bis die Zielposition $N_2$ erreicht ist. **ABBILDUNG 4** in Fig. 4 zeigt ein typisches Beispiel. Ohne Beschränkung der Allgemeinheit wurden der Einfachheit wegen die Parameter so gewählt, dass der Bereich konstanter Geschwindigkeit (Plateau-Bereich) nicht auftritt.

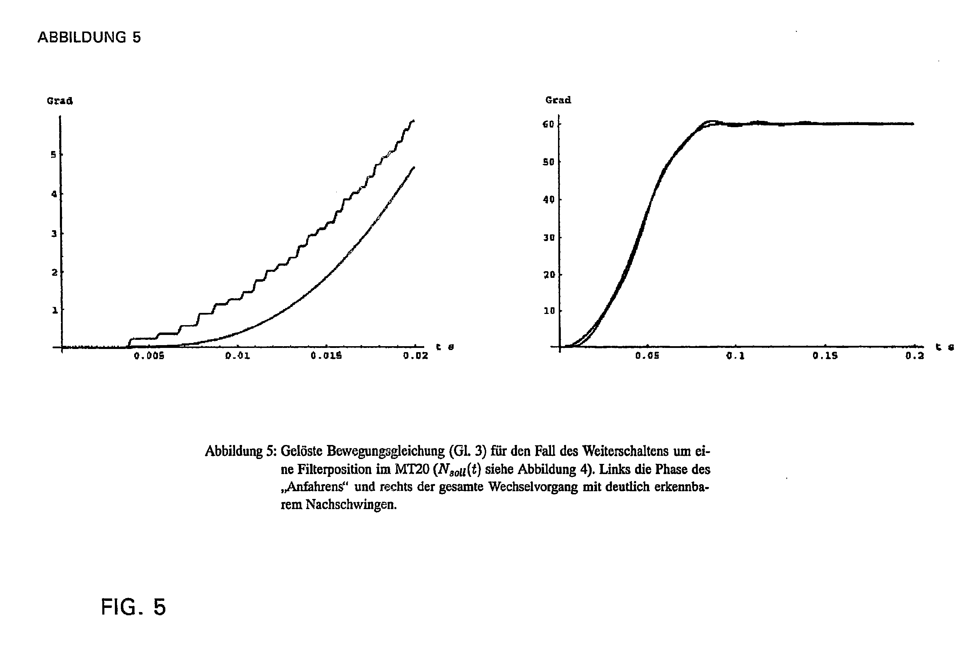

Nun können $\Theta$, N und die GLEICHUNG 1 in Fig. 3 zur vollständigen Bewegungsgleichung des bestromten, bewegten Aufbaus mit μ-Schritt-Ansteuerung zusammengesetzt werden. Es **resultiert GLEICHUNG 3** in Fig. 3, wobei $N_{soll}(t)$ die vom Controller vorgegebene, zeitabhänige μ-Schritt-Position bezeichnet. Diese Gleichung entzieht sich schon wegen dem Rückstelldrehmoment einer analytischen Lösung, ist aber mit Standardmethoden der numerischen Mathematik leicht numerisch integrierbar. **ABBILDUNG 5** in Fig. 5 zeigt entsprechende numerische Lösungen.

ABBILDUNG 5 in Fig. 5 zeigt auf der rechten Seite den gesamten Wechselvorgang (Wechsel zwischen zwei Filtern des Filterrads) und links eine Ausschnittsvergrößerung nur für die ersten Grad bei der Beschleunigung (beim Beschleunigen gilt GLEICHUNG 3a in Fig. 3). Man erkennt deutlich das "Hinterherhinken"der Mechanik (durchgezogene, glatte Linie) hinter der Soll-Position (zackige Linie, da Ansteuerung in diskreten Schritten erfolgt) in der Beschleunigungsphase. Das hier zugrundegelegte, bevorzugt anzuwendende Modell berücksichtigt dabei, dass die Bestromung des Motors nicht instantan geändert werden kann, sondern dass eine von der Induktivität des Motors abhängige Zeit hierfür notwendig ist.

Will man die Mechanik möglichst schnell bewegen, so ist der Wert der Beschleunigung möglichst groß zu wählen, ohne dass die Größe des "Nachlaufens" $\Phi(t)- \Theta(N_{soll}(t))$ in einen kritischen Bereich gerät.

Dieses "Hinterherhinken" beim Beschleunigungsvorgang (beim Abbremsen gilt **GLEICHUNG 3b** in Fig. 3, es tritt ein äquivalentes "Vorauseilen"auf) ist zusammen mit den Wechseln in der Beschleunigung (z.B. bei 0.045 s in der linken Hälfte der ABBILDUNG 4 in Fig. 4) eine wesentliche Quelle für Schwingungen des Filterrades. Deutlich erkennbar sind die Nachschwingungen der Mechanik, auch wenn sich die Sollposition nicht mehr ändert (t>90ms im rechten Teil von **ABBILDUNG 5** in Fig. 5).

**Ansatz zur Schwingungsvermeidung oder Schwingungsreduzierung:**

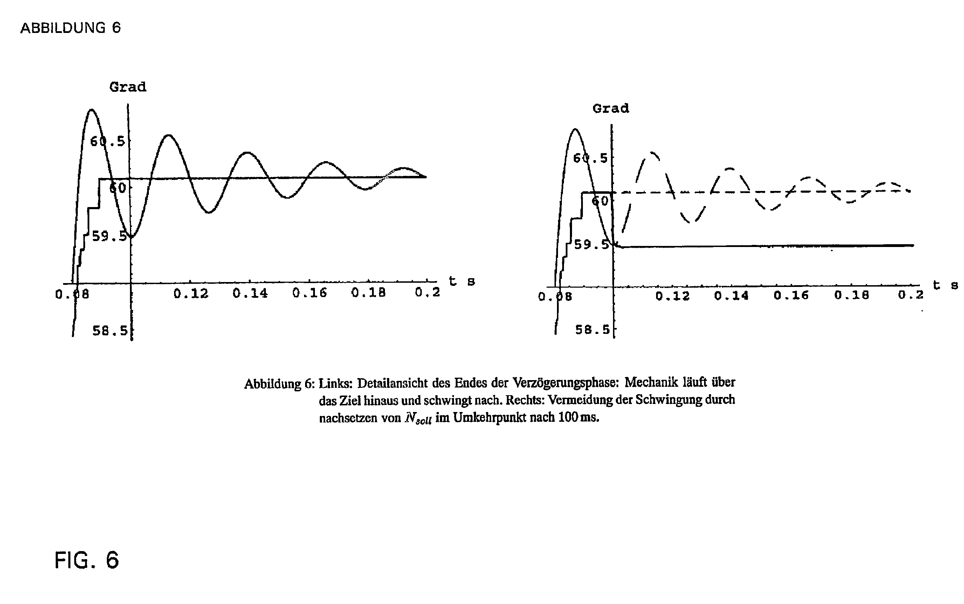

ABBILDUNG 6 in Fig. 6 zeigt links eine Detailansicht des Abbremsens. Zur Zeit 90ms ist die Sollposition erreicht, aber die Mechanik ist ca. 0.7° über die Sollposition hinausgelaufen und bereits in der Rücklaufphase. Die Schwingungen sind nach 200 ms auf 1/5 der Anfangsamplitude abgeklungen — bei einer Wechselzeit von 90 ms ist das häufig nicht akzeptabel. Für viele Anwendungen sind Filter-Wechselzeiten von 50 ms anzustreben, was die Anfangsamplitude noch deutlich vergrößert.

Eine bevorzugte Ausprägung der *zentralen Erfindungsidee* ist im rechten Teil der ABBILDUNG 6 in Fig. 6 gezeigt: In einem Umkehrpunkt (bevorzugt im ersten Umkehrpunkt nach Erreichen der programmierten Sollposition, im Beispiel etwa bei 100 ms (es wäre auch denkbar, bereits den Umkehrpunkt vor dem Erreichen der Sollposition zu verwenden, was die Wechselzeiten noch weiter reduzieren würde) wird die Sollposition schlagartig umgesetzt und zwar dorthin, wo die Mechanik gerade steht. Ein derartiges Umsetzten ist mit den üblichen Controller-Chips leicht auf die folgende Weise möglich: (1) setzen von Beschleunigung und Maximalgeschwindigkeit auf einen sehr hohen Wert, (2) Neue Zielposition anfahren und (3) Zurücksetzen von Beschleunigung und Maximalgeschwindigkeit auf die alten Werte.

Bei diesem Umsetzen bzw. durch dieses Umsetzen wird die Energie, die in der Auslenkung der Mechanik gespeichert ist, elektrisch abgeführt (der Treiberchip muss das Magnetfeld "umbauen", was Arbeit bedeutet) und dem System entzogen. Das Ergebnis ist, dass im Idealfall nach dem Umsetzen der Position keine Schwingung mehr zu beobachten ist. In der Regel wird man, zumindest in der Praxis, die exakte aktuelle Position der Mechanik nur approximieren koennen. So beträgt z.B. im vorliegenden Beipielsfall der Abstand zweier μ-Schritte etwa 0.225 °. Am hier zugrundegelegten Prototypen konnte experimentell eine Reduktion um den Faktor 5 erreicht werden: Die Schwingungsamplitude, die ohne das Umsetzen erst nach 200 ms erreicht ist, kann man mit dem Umsetzen in 100 ms erreichen, was Netto einer Halbierung der Filterwechselzeit bedeutet. Weitere Verbesserungen durch weitere Optimierungen sind denkbar.

Durch das Umsetzen (im Beispiel aus *ABBILDUNG 6* in Fig. 6 um ca. 0.6°) landet man bei einer anderen Sollposition als der gewünschten, aber das läßt sich einfach beheben, indem man zuerst eine andere Position anfährt und zwar dergestalt, dass das Umsetzen auf die gewünschte Sollposition hin erfolgt.

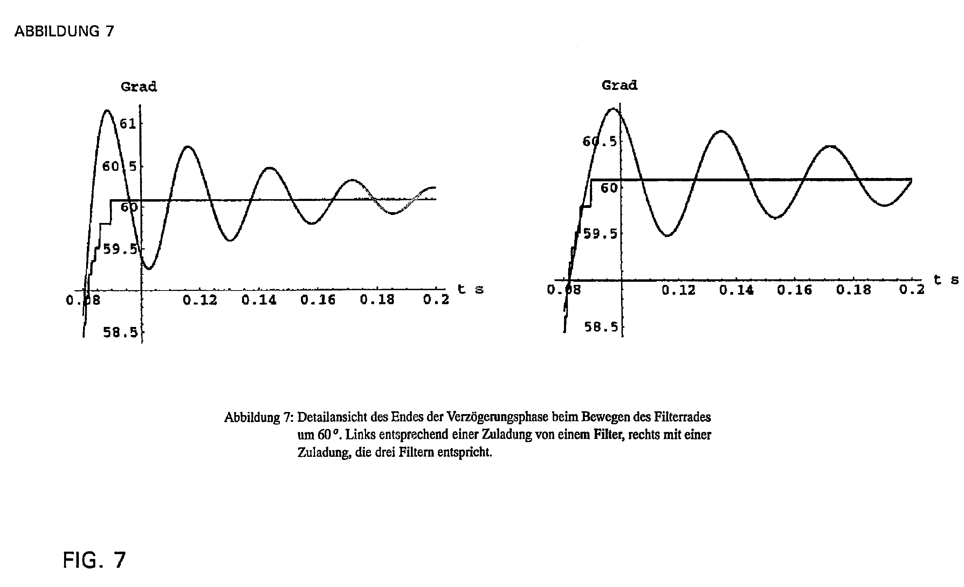

Wie die Schlussphase des Abbremsens genau abläuft, ist auch abhängig von der Vorgeschichte - um wieviele Filterpositionen, oder Grad, wurde weitergefahren - und von der Zuladung an Filtern. **ABBILDUNG 7** in Fig. 7 zeigt einen Vergleich beim Fahren von jeweils 60 Grad für die Beladung mit einem Filter (links) sowie für eine Zuladung von drei Filtern (rechts). Entsprechend dem höheren Trägheitsmoment ist im rechten Teil die Frequenz der Schwingung deutlich niedriger.

**Bevorzugte Umsetzung des Ansatzes zur Schwingungsvermeidung oder Schwingungsreduzierung:**

Mit dem vorliegenden mathematischen Modell des Systems kann für beliebige Parameter das Verhalten des Systems berechnet werden. Bei gegebenen

**System-Parametern und -Funktionen** $\beta$, M, $\Theta$ und $I_{HW}$,

der

**Zuladung** $I_{Filter}$,

sowie der

**Rampe und Zielposition** $\Phi_{soll}(t)$

kann also ausgerechnet werden, wann nach dem Erreichen der Sollposition der erste Umkehrpunkt der Mechanik erreicht ist (Zeitpunkt $\tau$) und um wieviel die Sollposition dann in welche Richtung gesetzt werden muss ($\Delta N_{soll}$). Anzumerken ist, dass in der Funktion $\Phi_{soll}(t)$ implizit die Zielposition enthalten ist. Ohne Beschränkung der Allgemeinheit kann auch davon ausgegangen werden, dass die Bewegung immer bei 0 (Null) startet. Es stellt kein Problem dar, einerseits von absoluten Drehpositionen und gewünschten absoluten Dreh-Verstellbewegungen auszugehen und andererseits für die Ausführung des Verfahrens bzw. bei der Implementation des Algorithmus relative Drehpositionen bzw. Dreh-Verstellbewegungen entsprechend anzusetzen. Zudem kann bei der Initialisierung (siehe unten) die Frequenz $f$ der Schwingung ermittelt werden, wenn die Amplitude auf Werte abgesunken ist, wo die harmonische Näherung gültig ist (<2°).

Im folgenden wird nun beschrieben, wie man zweckmäßig bezogen auf ein konkretes System den Ansatz zur Schwingungsvermeidung oder Reduzierung konkret umsetzen kann (Design-Prozess), wie unterschiedliche Filterzuladungen $I_{Filter}$ berücksichtigt werden können und wie nach einer bevorzugten Ausprägung konkret die momentan gültige Zuladung $I_{Filter}$ bestimmbar ist.

Design-Prozess:

An dem konkreten System sind zunächst die Systemparameter zu bestimmen. Dies muss nur einmal gemacht werden, wenn das System entwickelt wird:

- M erhält man, indem man den bestromten Motor mit einer Federwaage auslenkt. Dabei übt man ein gewisses Drehmoment aus und beobachtet - z.B. mit einem Lichtzeiger - die Reaktion der Anordnung. Man wiederholt die Prozedur bei verschiedenen Bestromungen und erhält *M*, wie es in **ABBILDUNG 2** in Fig. 2 gezeigt ist. Als Lichtzeiger kann man beispielsweise einen Spiegel auf das Filterrad aufkleben, einen Laserstrahl beispielsweise von einer Laserdiode auf den Spiegel richten und Reflexionspunkt an einer Fläche etwa einer Wand beobachten. Aus der Geometrie und der Position des Reflexes kann der Winkel berechnet werden.

- Die "Feinfahrfunktion", alias $\Theta$ oder **ABBILDUNG 3** in Fig. 2 lässt sich ebenfalls mit einem Lichtzeiger oder einem genauen Winkelmesser unter verschiedener Bestromung des Motors ermitteln (Durchfahren der $\mu$-Steps).

- Die Form der Rampen erhält man aus den Datenblättern des verwendeten Controllers.

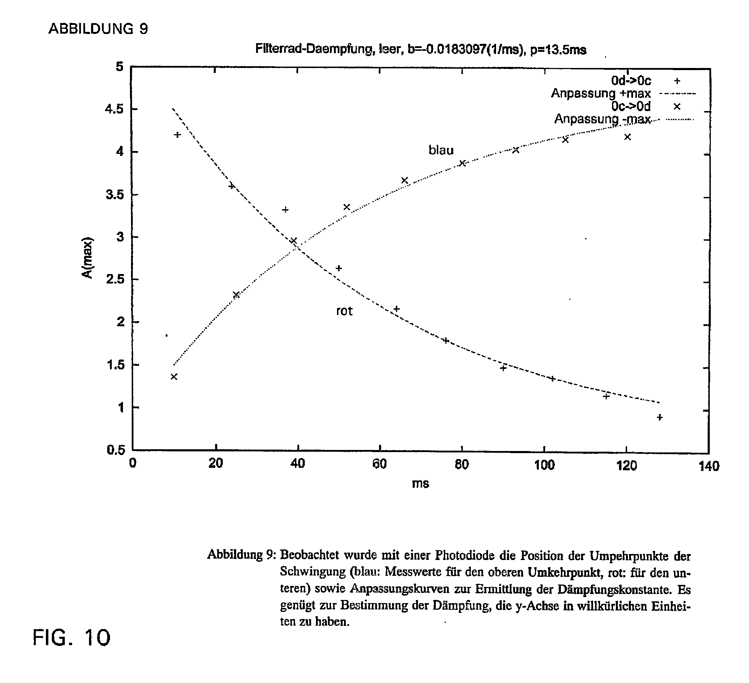

- Die Dämpfung $\beta$ des Systems kann durch Aufnehmen einer Sprungantwort bestimmt werden: Man ändert schlagartig die Bestromung, so dass sich die Sollposition um z.B. 2 ° ändert (man sollte im harmonischen Bereich bleiben) und beobachtet mit einer schnellen Kamera oder einer Photodiode die Bewegung eines Lichtzeigers. Alternativ kann auch ein Encoder zum Einsatz kommen. **ABBILDUNG 9** in Fig. 10 zeigt eine Messung am Beispiel von MT20. Ein Encoder (Drehgeber) ist jedoch vergleichsweise kostenaufwendig und bringt i.d.R. zusätzliches, nicht erwünschtes Trägheitsmoment in das System ein.

- Durch Aufnahme der Sprungantwort, bei der Bestimmung der Dämpfung bzw. analog hierzu, wird ferner noch die Frequenz der Schwingung im harmonischen Bereich ermittelt. Aus dieser lässt sich zusammen mit *M* das Trägheitsmoment der Anordnung $I_{HW}$ berechnen, für die Initialisierung der Schwingungsvermeidung bzw. Schwingungsreduzierung.

Mit den erhaltenen Parametern wird nach einer bevorzugten Ausführungsform in Abhängigkeit der **Zuladung** und der **Fahrweite $N_{soll}$** eine zweidimensionale Tabelle mit Werten für $\tau$, f und $\Delta N_{soll}$ berechnet. Es geht hierbei die beabsichtigte Rampe $\Phi_{soll}(t)$ ein, die ja $N_{soll}$ festlegt. Mit heutigen Rechnern kann leicht für jede beliebige Zielposition (im Beispielsfall von 1600 $\mu$-Schritten pro Umdrehung ist das typischerweise mit maximal 800 Zeilen Programmcode machbar, je nach Art der Programmierung) die Berechnung durchgeführt werden. Ein Beispiel ist in **TABELLE 1** in Fig. 8 gezeigt.

Aus der berechneten Tabelle können nun die Einträge herausgesucht bzw. bestimmt werden, bei denen $N+\Delta N_{soll}$ näherungsweise die gewünschte Zielposition ergibt und erstellt damit eine neue, wiederum zweidimensionale Tabelle, in der $\tau$, $N_{soll}$ und $\Delta N_{soll}$ gegen die **Frequenz** f und die **Fahrweite** aufgetragen sind. Auf diese Weise ist vorteilhaft die Zuladung $I_{Filter}$ eliminiert und durch eine direkt messbare Größe ersetzt. Als Ergebnis wird bevorzugt eine weitere (zweite) Tabelle bereitgestellt. Ein entsprechendes Beispiel ist in **TABELLE 2** in Fig. 8 gezeigt.

Einschaltprozedur/Änderung der Zuladung:

Beim Einschalten des Systems erfolgt nach der hier zugrundegelegten bevorzugten Ausführungsform experimentell eine Bestimmung der Schwingungsfrequenz $f_{mess}$ der Mechanik. Damit wird indirekt die Zuladung bestimmt. Das Vorgehen hierbei kann zweckmäßig das Folgende sein:

In schrittmotorbasierten Systemen ist in der Regel eine Möglichkeit vorgesehen, die Nulllage der Mechanik zu bestimmen. In der Regel handelt es sich hierbei um eine kostengünstige Lichtschranke oder einen Encoder. Beide Sensortypen können benutzt werden, um eine Sprungantwort direkt im System aufzunehmen.

Im Falle der Lichtschranke wird der Motor nach dem Einschalten langsam bewegt, bis sich der Zustand der Lichtschranke ändert. Danach wird der Motor langsam um (im zugrundegelegten Beispielsfall) ca. 2° von dieser Position $N_{null}$ zurückgefahren. Nach einer angemessenen Wartezeit, in der sich das System beruhigen kann (hier z.B. 500ms), wird die Position schlagartig wieder auf $N_{null}$ gesetzt und das oszillatorische Signal der Lichtschranke zur Bestimmung der Frequenz $f_{mess}$ ausgewertet.

Solange sich die Zuladung nicht ändert kann diese Frequenz benutzt werden, um die für die Schwingungsvermeidung bzw. Schwingungsreduzierung zugrundezulegende Spalte in der oben angesprochenen zweiten Tabelle (vgl. **TABELLE 2** in Fig. 8) festzulegen.

Vorgehen beim Filterwechsel:

Beim jedem Filterwechsel wird in der bei der Einschaltprozedur ausgewählten Spalte der Tabelle (vgl. TABELLE 2 in Fig. 8) nachgesehen und der Motorcontroller mit der in der Tabelle für die gewünschte Fahrweite angegebenen Zielposition $N_{soll}$ gestartet. Während dieser die Rampe generiert und die Mechanik in Bewegung ist können in der ausgewählten Spalte der Tabelle noch die zutreffenden Werte für $\tau$ und $\Delta N_{soll}$ nachgesehen werden. Ist $N_{soll}$ erreicht, so erfolgt nach der Wartezeit $\tau$ das Umsetzen der Position um $\Delta N_{soll}$, was dann die Mechanik am beabsichtigten Zielort zum Stillstand bringt, da sie sich zu dieser Zeit genau in einem Umkehrpunkt auf der anvisierten Zielposition befindet.

Konkrete Beispiel in Bezug auf die Beispielsdaten der TABELLE 2 sind folgende: Wird bei der Initialisierung des Systems bzw. auf einen Filterwechsel als Frequenz $f_{mess}$ die Frequenz 59 Hz oder eine dieser Frequenz innerhalb eines vorbestimmten Messunschärfeintervalls entsprechende Frequenz bestimmt, bedeutet dies, dass bei in Folge durchzuführenden Stellvorgängen die "59 Hz"-Spalte der Tabelle maßgeblich ist. Soll nun das Filterrad von einer Drehstellung 1 zu einer Drehstellung 2 entsprechend einer Drehung um 267 Mikroschritte ($\mu$-Steps) verdreht werden, so ist nach Maßgabe der "59 Hz"-Spalte der Tabelle das Filterrad in einem ersten Schritt gemäß der für die Daten der Tabellen zugrundegelegten Rampe um 262 Mikroschritte zu verfahren, und dann - gerechnet ab Erreichen einer den 262 Mikroschritten entsprechenden Zwischendrehstellung - in einem zweiten Schritt nach 6.4 ms um weitere 5 Mikroschritte "ruckartig" in die den insgesamt 267 Mikroschritte entsprechende Zieldrehstellung, d.h. Drehstellung 2. Ist hingegen die "76 Hz"-Spalte der Tabelle in Folge der Initialisierung als maßgeblich erkannt, so wäre für die Überführung des Filterrads von der Drehstellung 1 in die Drehstellung 2 im ersten Schritt das Filterrad um 270 Mikroschritte zu verfahren und dann, nach 10.6 ms, im zweiten Schritt "ruckartig" um 3 Mikroschritte in der zur Drehrichtung des ersten Schritts entgegengesetzten Drehrichtung.

Es sollte erwähnt werden, dass es in Abweichung von den vorangehenden Ausführungen zum 1. Ausführungsbeispiel durchaus in Betracht kommt, während einer Initialisierung des Systems die den Daten einer Spalte der TABELLE 2 auf Grundlage der gemessenen Frequenz $f_{mess}$ und eines als entsprechende Numerik-Routine implementierten mathematischen Modells auf den oben angegebenen theoretischen Grundlagen erst zu berechnen. Dies kommt insbesondere dann in Betracht, wenn das betreffende System ohnehin mit einer Rechnereinheit ausgerüstet ist. Sinnvoll erscheint insbesondere, dass vom Hersteller oder Anbieter des Systems oder von einem Filtersatzanbieter bezogen auf einen zugrundegelegten, ggf. mit dem System mitgelieferten Filtersatz für alle damit kombinatorisch möglichen Zuladungen des Filterrads die Daten entsprechend **TABELLE 2** bezogen auf die aus den verschiedenen Zuladungen resultierenden verschiedenen Frequenzen $f_{mess}$ bereitgestellt werden, und dass in dem Fall, dass eine von den vorgesehenen Frequenzen $f_{mess}$ zu stark abweichende Frequenz $f_{mess}$ gemessen wird, die Initialisierungsroutine die Numerik-Routine aufruft, um für die bestimmte Frequenz $f_{mess}$ die benötigten Daten entsprechend einer Tabellenspalte von **TABELLE 2** zu berechnen. Die entsprechenden Systembetriebsdaten (eine Organisation der Daten in einer Tabelle ins nicht zwingend) können dann für den weiteren Betrieb um die berechneten Daten ergänzt werden (im Tabellenfall der **TABELLE 2** eine weitere Spalte hinzufügt). Im Falle einer hinreichend schnellen Rechnereinheit kommt es durchaus auch in Betracht, bedarfsweise entsprechend den dem Filterrad zu erteilenden Verstellungen zwischen verschiedenen Soll-Drehstellungen nur jeweils die für einen Verstellvorgang benötigten Daten $N_{soll}$, $\tau$ und $\Delta N_{soll}$ (entsprechend einem Tabellenfeld der TABELLE 2) zu berechnen und vorzugsweise für die weitere Verwendung auch zu einem späteren Zeitpunkt in den Systembetriebsdaten abzuspeichern.

Ist keine hinreichend schnelle Rechnereinheit vorhanden, so kann man alternativ auch daran denken, eine Interpolation oder Näherung von Zwischenwerten für $N_{soll}$, $\tau$ und $\Delta N_{soll}$ auf Grundlage der vorgehaltenen Daten entsprechend TABELLE 2 vorzusehen, wenn während der Initialisierung ein von den vorgesehenen Frequenzen $f_{mess}$ ein zu stark abweichende Frequenz $f_{mess}$ gemessen wird. In Betracht kommt insbesondere eine das oben angegebene theoretische Modell zugrundelegende Interpolation oder Näherung, etwa unter Verwendung von Reihenansätzen für die verschiedenen Größen. Hierzu existieren verschiedene geeignete, ohne weiteres in einer entsprechenden Prozedur für eine Rechnereinheit oder einen vorgesehen Controller implementierbare mathematische Methoden vor allem aus dem Gebiet der "Mathematischen Physik". Ohne Beschränkung der Allgemeinheit soll das Stichwort "Störungsrechnung" gegeben werden.

**Schlussfolgerung, mögliche Abwandlungen, andere Anwendungen:**

Gemäß vorstehendem ist ein Verfahren zur Vermeidung oder Reduzierung von Schwingungen in direkt gekoppelten, aktuatorgetriebenen (insbesondere schrittmotorgetriebenen) Systemen beschrieben, das ohne Zusatzhardware auskommt. Neben der beim Ausführungsbeispiel angenommenen experimentellen und theoretischen Ermittlung benötigter Parameter und Größen kommt auch eine rein experimentelle und auch eine rein theoretische Ermittlung der benötigten Parameter und Größen in Betracht Neben der Bereitstellung von benötigten Daten im Wege von Tabellen oder alternativ Kennfeldern oder Kennkurven (in diesem Zusammenhang kommt es durchaus in Betracht, nicht in den Daten vorhandene oder nicht hieraus ableitbare Zwischenwerte zu interpolieren) könnte es ferner auch in Betracht kommen, ein numerisches Modell zu implementieren, auf dessen Grundlage im Betrieb die benötigten Größen bzw. Parameter bestimmt werden.

Ein zentraler Erfindungsgedanke bezieht sich auf *das Umsetzen der Sollposition zur Vermeidung bzw. Reduzierung der Schwingungen.* Bevorzugt ist zum automatischen und adaptiven Reagieren des Systems eine *Kalibrierungsprozedur* vorgesehen, die bevorzugt einen ohnehin vorhandenen Nullpunktsensors verwendet.

Der Vorteil des erfindungsgemäßen Verfahrens gegenüber geregelten Lösungen des Stands der Technik liegt in geringeren Kosten und einer größeren Geschwindigkeit. Stand der Technik sind Schrittmotor-Controller (insbesondere in Chip-Form), die die Einstellung von "Verfahrrampen" ermöglichen und bereits vor dem Erreichen der Zielposition die Beschleunigung reduzieren. Dadurch wird zwar das Auftreten von Schwingungen vermieden bzw. reduziert, aber auch der Stellvorgang - bezogen auf den Beispielsfall der Filterwechselvorgang - erheblich verlangsamt.

Die Erfindungsvorschläge können auch auf lineare Schrittmotoren oder allgemein lineare Aktuatoren angewendet werden. Die Erfindungsvorschläge können - mit entsprechender Anpassung - auch auf andere Arten von elektromagnetischen Aktuatoren (Stellglieder) als Schrittmotoren angewendet werden.

## 2. Ausführungsbeispiel:

Ein elektromechanischer Aktuator, beispielsweise ein Schrittmotor, soll ein Element möglichst schnell von einer Position zu einer zweiten bewegen, ohne dass sich Element an der zweiten Position in zu starken Schwinungen befindet.

Um die Erfindung einfacher erläutern zu können wird folgende Analogie verwendet: Jeder bestromte Schrittmotor kann - zumindest in einer hinreichend guten Näherung - als Oszillator, beispielsweise in der Art eines Federpendels, angesehen werden, welcher - zumindest in einer hinreichend guten Näherung - sich als harmonischer Oszillator beschreiben lässt. Dabei entspricht die Federkonstante der Rückstellkraft des Magnetfeldes und die Masse dem Trägheitsmoment der Welle mit den Wicklungen und einem evtl. auf der Welle angebrachtem Element. Dieses Element soll mit Hilfe des Motors in eine definierte Position gebracht werden. Diese Einheit aus Welle, Wicklungen und evtl. angebrachtem Element wird nun immer als Verstellelement (VE) bezeichnet. Im Folgendem wird ein Dreh-Schrittmotor beschrieben, jedoch ist sinngemäß die Erfindung auch bei einem Linear-Schrittmotor und allgemein auch bei anderen Typen von elektromagnetischen Aktuatoren anwendbar.

Beim vorliegenden Ausführungbeispiel hat der Schrittmotor die Aufgabe, das Verstellelement möglichst schnell von einer Position in eine andere zu drehen. Dies ist dann möglichst schnell zu realisieren, wenn die Schwingungen des Verstellelements nach dem Abbremsen die Funktion des Verstellelements nicht beeinträchtigen, also auf ein definiertes Maß reduziert sind. Da im Oszillatorbild dieser sowohl beim Beschleunigen wie auch beim Abbremsen in Schwingungen gerät, ergibt sich die Aufgabe, diese Schwingungen zu reduzieren.

Bei dem schematischen Ausführungsbeispiel gemäß Fig. 11 besteht beispielsweise die Aufgabe, schnellstmöglich z.B. eine vorgegebene oder vorgebbare Position (Pos 2) präzise mit dem Marker (M) auf Deckung zu bringen. Dies ist dann möglich, wenn die Schwingungen bei Erreichen der gewünschten Position schnellstmöglich auf ein definiertes Niveau gedämpft werden. Diese Schwingungen entstehen, wenn, um schnell die Position zu erreichen, abrupt abgebremst wird.

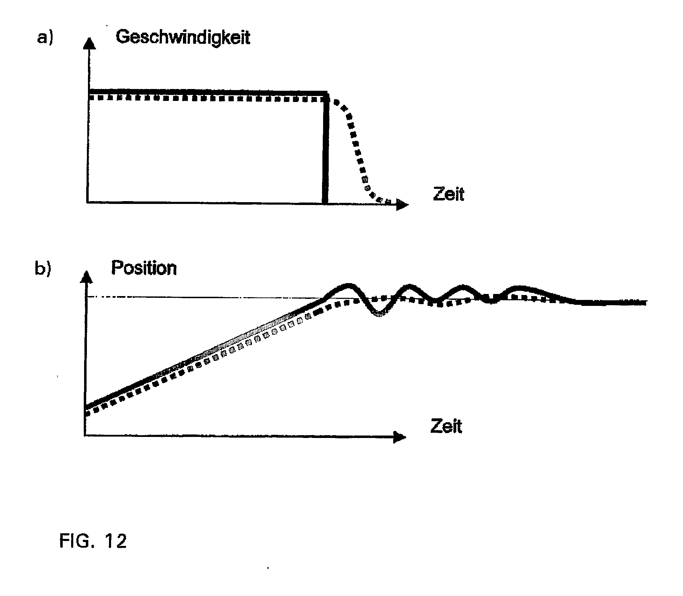

In der Darstellung gemäß Fig. 12 wird der Stand der Technik durch die gestrichelte Linie dargestellt. Dabei wird, um die Bewegung an der gewünschten Position zu beenden, die Geschwindigkeit entsprechend der gezeichneten Kurve reduziert und so die Schwingungen des Systems um die Position minimiert. Nachteil dieser Methode ist, dass die Zeit zum schwingungsminimierten Erreichen der Position verlängert wird.

Um die Zeit zum Erreichen der Sollposition zu minimieren, kann andererseits die Geschwindigkeit "schlagartig" reduziert werden. Folge davon ist aber, dass Schwingungen um die Position herum entstehen. Diese Schwingungen sind unerwünscht und es ist erfindungsgemäße Aufgabe, diese zumindest zu reduzieren.

In der weiteren Erklärung wird das Bild des harmonischen Oszillators verwendet, um in diesem Modell die Erfindung bzw. eine Ausführungsform der selben zu verdeutlichen.

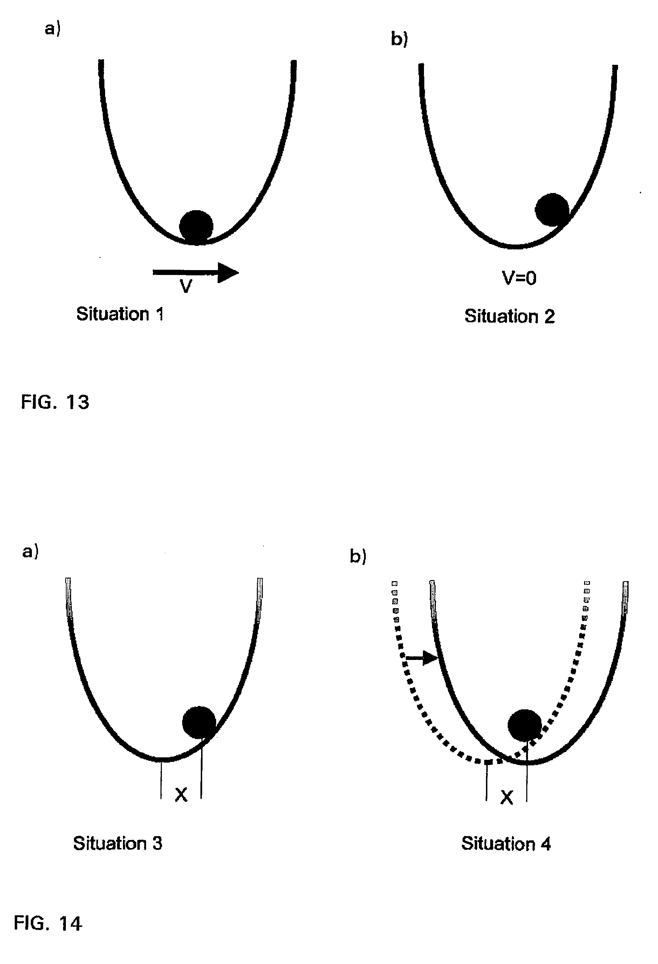

In der Situation 1 gemäß Fig. 13 bewegt sich der harmonische Oszillator (HO), welcher als Parabel dargestellt wird, nach rechts mit der konstanten Geschwindigkeit V. Eine dem Oszillatorpotential ausgesetzte Kugel liegt in der sogenannten Ruhelage. Dann wird der harmonische Oszillator ruckartig abgebremst auf die Geschwindigkeit V=0. Die Kugel bewegt sich aus der Ruhelage weiter in die anfängliche Richtung bis sie sich nach einer ¼ Schwingungsperiode in der höchsten Position befindet (Situation 2 gemäß Fig. 13). Danach schwingt die Kugel um die Ruhelage. Diese Situation entspricht der Situation gemäß Fig. 12, wie durch die durchgezogenen Linien angegeben.

Nach dem ruckartigen Abbremsen bewegt sich die Kugel entsprechend ihrer Masse, der anfänglichen Geschwindigkeit V und der Krümmung der Parabel maximal um x, an diesem Ort steht sie kurzzeitig (Situation 3 gemäß Fig. 14) und rollt dann in Richtung Ruhelage zurück.

Die gestellte Aufgabe wird nun gelöst, indem in der Modelldarstellung die Parabel exakt dann, wenn die Kugel am Ort X ruht, ruckartig um den Abstand X versetzt wird (Situation 4 gemäß Fig. 14). Die Kugel "fällt" hierdurch gewissermaßen in ihre Ruhelage, so dass keine oder zumindest deutlich reduzierte Schwingungen mehr im System sind. In dieser idealisierten Darstellung wird also die Bewegung der Parabel zweimal nacheinander ruckartig verändert: erst abgebremst und dann um den Betrag X versetzt. In der Realität wird mit dem Schrittmotor dieses Versetzen um den Betrag X dadurch realisiert, dass der Schrittmotor um eine definierte Anzahl von Mikroschritten verfahren wird.

Die Positionen aus dem Ausführungsbeispiel sind auf dem Umfang gleichverteilt. Die Strecken, um die verstellt wird entspricht dem Unterschied der einzelnen Positionen, also z.B. zwischen einer ersten Position (Pos 1) und einer dritten Position (Pos 3), was sich nicht unterscheidet von einem Verstellen zwischen einer fünften Position und einer siebten Postition. Die Differenz-Verstellstrecke bzw. der Differenz-Verstellwinkel (Delta-Größe) definiert zusammen mit dem wirksamen Trägheitsmoment (beispielsweise abhängig von der Ausbildung des Filterrads, der Anzahl und dem Gewicht der darauf geladenen optischen Filter; vgl. 1. Ausführungsbeispiel oben) dem Magnetfeld des Motors und einem Dämpfungsterm den zur Schwingungunterdrückung einzustellenden Versatz X (im Bild des harmonischen Oszillators) bzw. einer entsprechenden Verstellstrecke bzw. einem entsprechenden Verstellwinkel. Bezogen auf das oben erläutere 1. Ausführungsbeispiel definieren diese Größen mathematische Model, welches den optimalen Versatz X ermittelt, bzw. eine entsprechende Tabellenzeile, welche den optimalen Versatz X angibt.

Die Annahme, dass die Kugel bei gleichmäßiger Geschwindigkeit V sich in der Ruhelage befindet, ist richtig oder zumindest eine sehr gute Näherung. Jedoch muss der harmonische Oszillator erst auf die Geschwindigkeit V beschleunigt werden, was zu einer Auslenkung der Kugel und somit zu Schwingungen führt. Dies kann zweckmäßig dadurch berücksichtigt werden, indem sowohl das Schwingungsverhalten bei einer definierten Strecke als auch das aktuelle Trägheitsmoment (z.B. nach Auswechseln eines optischen Filters) mittels einer "Kalibrierroutine" ermittelt wird. Auf diese Weise kann das mathematische Model angemessen angepasst werden oder kann eine anzuwendende Tabellenspalte (vgl. das 1. Ausführungsbeispiel) bestimmt werden.

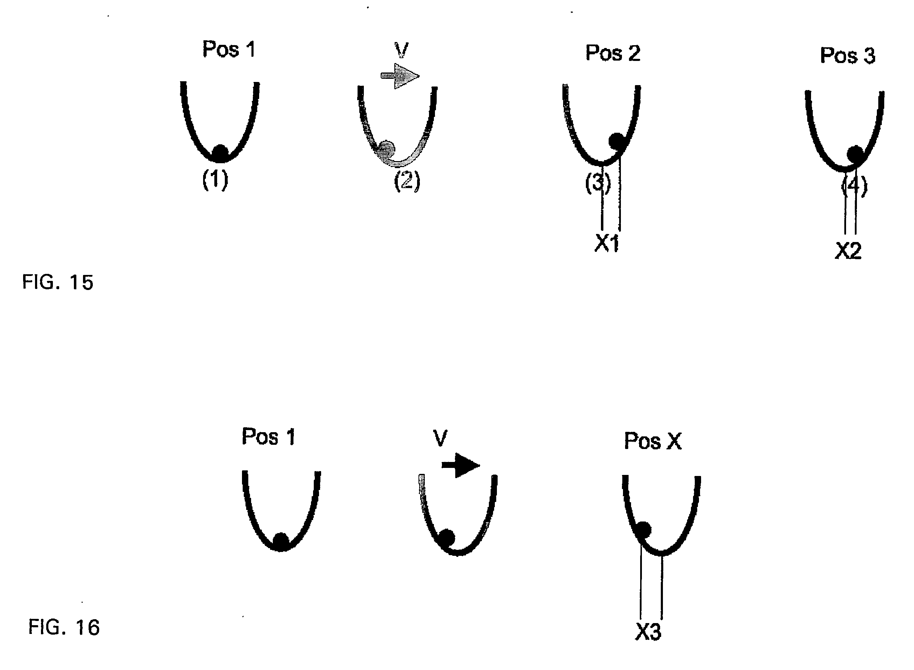

Bezugnehmend auf Fig. 15 wird der harmonische Oszillator von der Stellung gemäß Teilfigur a), welche z.B. Pos 1 aus Fig. 11 entspricht, auf Geschwindigkeit V beschleunigt (Teilfigur b). Die Kugel wird entsprechend ausgelenkt und schwingt danach. In der Stellung gemäß Teilfigur c), welches z.B Pos 2 aus Fig. 11 entspricht, befindet sich die Kugel beispielhaft in der eingezeichneten Position. Nach dem Erfindungsvorschlag in der hier zugrundegelegten Ausprägung wird der harmonische Oszillator nun abrupt abgebremst. Die Kugel bewegt sich weiter entlang der Parabel, bis sie kurzzeitig am höchsten Punkt steht. Nun wird der harmonische Oszillator die Strecke X1 (Abstand der Kugel vom tiefsten Punkt des Potentials) versetzt. Die Kugel befindet sich damit in der Ruhelage des harmonischen Oszillators. Der harmonische Oszillator wird also in einem ersten Schritt schon die Strecke X1 vor der Zielposition Pos 3, beim Beispiel an der Momentanposition Pos 2, abgebremst, um dann nach der in einem zweiten Schritt ruckartigen Verstellung um die Strecke X1 am Ende die gewünschte Pos 3 einzunehmen.

Der ruckartige Versatz kann ohne weitere auch entgegen der anfänglichen Geschwindigkeit V geschehen, falls der Schwingungszustand dies erfordert oder aus anderen Gründen sinnvoll ist. Es wird auf **Fig.16** verwiesen, die diese Möglichkeit veranschaulicht.

**Patentansprüche**

1. Verfahren zum Verstellen eines Elements (1) mittels eines Aktuators, der dafür ausgelegt ist, auf Grundlage einer entsprechenden Ansteuerung durch eine Steuereinheit das Element definiert zwischen einer Mehrzahl von diskreten Verstellpositionen oder/und kontinuierlich innerhalb eines Verstellbereichs zu verstellen,

   wobei das Element (1) im Zusammenwirken mit dem Aktuator in Folge einer Energiezufuhr eine Schwingung um eine einer momentanen Soll-Position des Elements entsprechende, durch den Aktuator verstellbare Mittelposition ausführen kann,

   wobei die Steuereinheit den Aktuator für eine Verstellung des Elements von einer Ausgangsposition zu einer Zielposition derart ansteuert,

   - dass das Element (1) bezogen auf die Mittelposition zuerst in eine der Zielposition benachbarte Interimsposition verstellt wird, die zwischen der Ausgangsposition und der Zielposition oder jenseits der Zielposition liegt, und
   - dass - nachdem die Interimsposition erreicht ist - mit einer definierten Zeitverzögerung ($\tau$) das Element (1) bezogen auf die Mittelposition von der Interimsposition in die Zielposition verstellt wird, derart, dass einer Schwingung des Elements um die momentane Mittelposition in Folge der Verstellung des Elements von der Ausgangsposition in die Interimsposition oder/und in Folge eines anderen Energieeintrags Energie entzogen wird,

   **dadurch gekennzeichnet,**
   **dass** ein Betriebszustand der Einheit aus Aktuator und Element verändert wird durch Zuladen wenigstens einer, vorzugsweise mehrerer vom Element (1) beim Verstellen mitzunehmenden Lademassen (7) auf das Element (1) bzw. durch Änderung einer momentanen Zuladung auf dem Element durch Entnahme oder Austausch oder Zuladen wenigstens einer Lademasse, und
   **dass** die Steuereinheit die Interimsposition und die Zeitverzögerung ($\tau$) in Abhängigkeit von dem Betriebszustand bestimmt.

2. Verfahren nach Anspruch 1, **dadurch gekennzeichnet, dass** die Steuereinheit den Aktuator derart ansteuert, dass im Wesentlichen im Moment des Erreichens eines einer momentanen maximalen Auslenkung des Elements (1) aus der Mittelposition entsprechenden Schwingungsmaximums das Element (1) ruckartig aus der Interimsposition in die Zielposition verstellt.

3. Verfahren nach Anspruch 2, **dadurch gekennzeichnet, dass** i) die Interimsposition oder der Abstand ($\Delta N$) zwischen der Interimsposition und der Zielposition oder der Abstand ($N_{soll}$) zwischen der Ausgangsposition und der Interimsposition und eine Orientierung, die angibt, ob die Interimsposition zwischen der Ausgangsposition und der Zielposition oder jenseits der Zielposition liegt, sowie ii) die Zeitverzögerung ($\tau$) auf Grundlage eines einer momentanen Zuladung entsprechenden Betriebszustands oder vorgesehenen, unterschiedlichen Zuladungen entsprechenden Betriebszuständen wenigstens eines den momentanen Betriebszustand der Einheit aus Aktuator und Element (1) charakterisierenden Parameters ($f_{mess}$) vermittels eines mathematischen Modells der Einheit aus Aktuator und Element (1) oder experimentell oder aus vorgehaltenen Daten bestimmt werden.

4. Verfahren nach Anspruch 3, **dadurch gekennzeichnet, dass** für eine Reihe von vorgesehenen Zuladungen bezogen auf wenigstens eine, vorzugsweise mehrere Verstelldifferenzen zwischen wenigstens einer, vorzugsweise mehreren vorgesehenen Ausgangspositionen und wenigstens einer, vorzugsweise mehreren vorgesehenen Zielpositionen i) der Abstand zwischen der jeweiligen Interimsposition und der jeweiligen Zielposition bzw. Ausgangsposition und die Orientierung sowie ii) die Zeitverzögerung bestimmt und für spätere Verstellvorgänge bereitgestellt werden.

5. Verfahren nach Anspruch 4, **dadurch gekennzeichnet, dass** der den momentanen Betriebszustand der Einheit aus Aktuator und Element charakterisierende Parameter ($f_{mass}$) messbar ist, und dass i) der Abstand zwischen der jeweiligen Interimsposition und der jeweiligen Zielposition bzw. Ausgangsposition und die Orientierung und ii) die Zeitverzögerung jeweils bezogen auf den den momentanen Betriebszustand der Einheit aus Aktuator und Element (1) charakterisierenden Parameter ($f_{mess}$) für spätere Verstellvorgänge bereitgestellt werden.

6. Verfahren nach Anspruch 5, **dadurch gekennzeichnet, dass** der momentane Betriebszustand durch Messen des den momentanen Betriebszustand der Einheit aus Aktuator und Element (1) charakterisierenden Parameter bestimmt wird und i) der Abstand zwischen der jeweiligen Interimsposition und der jeweiligen Zielposition bzw. Ausgangsposition und die Orientierung und ii) die Zeitverzögerung, die dem gemessenen Parameter zugeordnet sind, zumindest für eine einem Abstand zwischen einer Zielposition und einer Ausgangsposition entsprechende Verstelldifferenz ermittelt oder ausgewählt werden.

7. Verfahren nach Anspruch 5 oder 6, **dadurch gekennzeichnet, dass** der messbare bzw. zu messen-

de Parameter eine Schwingungsfrequenz ($f_{mess}$) der Einheit aus Aktuator und Element (1) umfasst.

8. Verfahren nach einem der Ansprüche 5 bis 7, **dadurch gekennzeichnet, dass** der messbare bzw. zu messende Parameter gemessen wird oder messbar ist durch Messen wenigstens einer Größe aus einer Antwort, insbesondere Sprungantwort, der Einheit aus Aktuator und Element (1) auf eine Anregung, insbesondere eine ruckartige oder impulsartige Anregung.

9. Verfahren nach einem der Ansprüche 1 bis 8, zumindest auch rückbezogen auf Anspruch 4, **dadurch gekennzeichnet, dass** für einen vorgegebenen Satz von zumindest zum Teil hinsichtlich der Trägheitsmasse unterschiedlichen Lademassen (7) zumindest für eine Untermenge der kombinatorisch möglichen Zuladungen des Elements (1) bezogen auf wenigstens eine, vorzugsweise mehrere Verstelldifferenzen zwischen wenigstens einer, vorzugsweise mehreren vorgesehenen Ausgangspositionen und wenigstens einer, vorzugsweise mehreren vorgesehenen Zielpositionen i) der Abstand zwischen der jeweiligen Interimsposition und der jeweiligen Zielposition bzw. Ausgangsposition und die Orientierung sowie ii) die Zeitverzögerung bestimmt und für spätere Verstellvorgänge bereitgestellt werden.

10. Verfahren nach einem der Ansprüche 1 bis 9, **dadurch gekennzeichnet, dass** das Element (1) vermittels des Aktuators längs einer vorzugsweise linearen Führungsstrecke verstellbar ist.

11. Verfahren nach einem der Ansprüche 1 bis 9, **dadurch gekennzeichnet, dass** das Element (1) vermittels des Aktuators um eine Drehachse drehbar oder um eine Schwenkachse schwenkbar ist.

12. Verfahren nach einem der Ansprüche 1 bis 11, **dadurch gekennzeichnet, dass** der Aktuator ein mit dem Element (1) direkt oder indirekt bewegungsverkoppeltes, linear relativ zu einer Aktuatorbasis verstellbares, auf elektromagnetischem Wege antreibbares Ausgangsglied aufweist.

13. Verfahren nach einem der Ansprüche 1 bis 11, **dadurch gekennzeichnet, dass** der Aktuator ein mit dem Element (1) direkt oder indirekt bewegungsverkoppeltes, relativ zu einer Aktuatorbasis um eine Drehachse drehbares, auf elektromagnetischem Wege antreibbares Ausgangsglied aufweist.

14. Verfahren nach einem der Ansprüche 1 bis 13, **dadurch gekennzeichnet**, der Aktuator als elektromagnetischer oder Galvanometer-Aktuator ausgeführt ist.

15. Verfahren nach einem der Ansprüche 1 bis 14, **dadurch gekennzeichnet, dass** der Aktuator als Schrittmotor ausgeführt ist.

16. Verfahren nach einem der Ansprüche 1 bis 15, **dadurch gekennzeichnet, dass** das Element als mehrere optische Filter haltender Filterhalter (1) ausgeführt ist, und die Verstellung des Elements mittels des Aktuators durchgeführt wird, um zwischen mehreren vom Filterhalter gehaltenen optischen Filtern (7) umzuschalten.

17. Verfahren nach Anspruch 16, **dadurch gekennzeichnet, dass** die optischen Filter (7) auswechselbar sind.

18. Verfahren nach Anspruch 17, **dadurch gekennzeichnet, dass** die optischen Filter (7) die Lademassen bilden.

19. Vorrichtung zum Verstellen eines Elements (1), insbesondere zur Durchführung des Verfahrens nach wenigstens einem der vorhergehenden Ansprüche, umfassend:

   - einen Aktuator, der ein mit dem Element direkt oder indirekt bewegungsverkoppeltes Ausgangsglied aufweist;
   - eine Steuereinheit zum Ansteuern des Aktuators, um das Element definiert zwischen einer Mehrzahl von diskreten Verstellpositionen oder/und kontinuierlich innerhalb eines Verstellbereichs zu verstellen,

wobei das Element (1) im Zusammenwirken mit dem Aktuator in Folge einer Energiezufuhr eine Schwingung um eine einer momentanen Soll-Position des Elements entsprechende, durch den Aktuator verstellbare Mittelposition ausführen kann, und wobei die Steuereinheit dafür ausgebildet oder/und programmiert ist, den Aktuator für eine Verstellung des Elements von einer Ausgangsposition zu einer Zielposition derart anzusteuern,

   - dass das Element (1) bezogen auf die Mittelposition zuerst in eine der Zielposition benachbarte Interimsposition verstellt wird, die zwischen der Ausgangsposition und der Zielposition oder jenseits der Zielposition liegt, und
   - dass - nachdem die Interimsposition erreicht ist - mit einer definierten Zeitverzögerung ($\tau$) das Element (1) bezogen auf die Mittelposition von der Interimsposition in die Zielposition verstellt wird, derart, dass einer Schwingung des Elements um die momentane Mittelposition in Folge der Verstellung des Elements von der Ausgangsposition in die Interimsposition Energie entzogen wird,

**dadurch gekennzeichnet,**
**dass** ein Betriebszustand der Einheit aus Aktuator und Element (1) veränderbar ist durch Zuladen wenigstens einer, vorzugsweise mehrerer vom Element (1) beim Verstellen mitzunehmenden Lademassen (7) auf das Element (1) bzw. durch Änderung einer momentanen Zuladung auf dem Element (1) durch Entnahme oder Austausch oder Zuladen wenigstens einer Lademasse (7), und dass die Steuereinheit dafür ausgebildet oder/und programmiert ist, die Interimsposition und die Zeitverzögerung ($\tau$) in Abhängigkeit von dem Betriebszustand zu bestimmen.

20. Vorrichtung nach Anspruch 19, **dadurch gekennzeichnet, dass** in einem in die Steuereinheit integrierten oder zugeordneten Speicher Daten enthalten sind, und dass die Steuereinheit dafür ausgelegt oder programmiert ist, aus diesen Daten i) die Interimsposition oder den Abstand zwischen der Interimsposition und der Zielposition oder den Abstand zwischen der Ausgangsposition und der Interimsposition und eine Orientierung, die angibt, ob die Interimsposition zwischen der Ausgangsposition und der Zielposition oder jenseits der Zielposition liegt, sowie ii) die Zeitverzögerung ($\tau$) direkt oder indirekt zu bestimmen, auf Grundlage eines einer momentanen Zuladung entsprechenden Betriebszustands oder vorgesehenen, unterschiedlichen Zuladungen entsprechenden Betriebszuständen oder wenigstens eines den momentanen Betriebszustand der Einheit aus Aktuator und Element (1) charakterisierenden Parameters ($f_{mess}$).

21. Vorrichtung nach Anspruch 20, **dadurch gekennzeichnet, dass** wenigstens ein Sensor vorgesehen ist, mittels dem der den momentanen Betriebszustand der Einheit aus Aktuator und Element (1) charakterisierende Parameter ($f_{mess}$) messbar ist, und dass die Steuereinheit dafür ausgelegt oder programmiert ist, auf Grundlage des gemessenen Parameters aus den Daten i) den Abstand zwischen der jeweiligen Interimsposition und der jeweiligen Zielposition bzw. Ausgangsposition und die Orientierung und ii) die Zeitverzögerung, die dem gemessenen Parameter zugeordnet sind, zumindest für eine einem Abstand zwischen einer Zielposition und einer Ausgangsposition entsprechende Verstelldifferenz zu ermitteln oder auszuwählen.

22. Vorrichtung nach einem der Ansprüche 19 bis 21, **dadurch gekennzeichnet, dass** das Element als Filterhalter, vorzugsweise Filterrad (1), mit mehreren optischen Filtern oder für mehrere vorzugsweise auswechselbare optische Filter (7) ausgeführt ist.

23. Vorrichtung nach einem der Ansprüche 19 bis 22, **gekennzeichnet durch** die in wenigstens einem der Verfahrensansprüche 1 bis 18 angesprochenen Vorrichtungsmerkmale.

24. Vorrichtung nach einem der Ansprüche 19 bis 23, **dadurch gekennzeichnet, dass** die Steuereinheit dafür ausgelegt oder programmiert ist, die Verfahrensschritte nach wenigstens einem der Verfahrensansprüche 1 bis 18 durchzuführen, soweit zutreffend im Zusammenwirken mit dem Aktuator bzw. dem Element (1) bzw. dem Sensor.

**Claims**

1. Method for adjusting an element (1) by means of an actuator which is designed on the basis of a corresponding activation by a control unit to adjust the element in a defined manner between a plurality of discrete adjusting positions and/or continually within an adjusting range,
wherein the element (1) in cooperation with the actuator following an input of energy can perform an oscillation about a middle position corresponding to a current reference position of the element adjustable by the actuator, wherein the control unit activates the actuator for adjusting the element from a starting position to a target position such that

   - the element (1) is first adjusted relative to the middle position into an interim position adjacent to the target position, which interim position is between the starting position and the target position or beyond the target position, and
   - once the interim position has been reached - with a defined time delay (r) the element (1) is adjusted relative to the middle position from the interim position to the target position, such that power is removed from an oscillation of the element about the current middle position following the adjustment of the element from the starting position into the interim position and/or following another input of energy,

   **characterised in that**
   an operating state of the unit of actuator and element is changed by charging at least one, preferably a plurality of charging masses (7) to be carried by the element (1) during the adjustment on the element (1) or by changing a current charge on the element by removing or exchanging or charging at least one loading mass, and **in that** the control unit determines the interim position and the time delay (r) as a function of the operating state.

2. Method according to claim 1, **characterised in that** the control unit activates the actuator such that essentially at the point of reaching an oscillation maximum corresponding to a current maximum deflection of the element (1) from the middle position the element (1) is adjusted suddenly from the interim position into the target position.

3. Method according to claim 2, **characterised in that** i) the interim position or the distance ($\Delta N$) between the interim position and the target position or the distance ($N_{ref}$) between the starting position and the interim position and an orientation, which indicates whether the interim position is between the starting position and the target position or beyond the target position, and ii) the time delay (r) on the basis of an operating state corresponding to a current charge or intended operating states corresponding to different charges at least of a parameter ($f_{mess}$) characterising the current operating state of the unit of actuator and element (1) are determined by means of a mathematical model of the unit of actuator and element (1) or experimentally or from derived data.

4. Method according to claim 3, **characterised in that** for a series of intended additional charges relative to at least one, preferably several adjusting differences between at least one, preferably several provided starting positions and at least one, preferably several intended target positions i) the distance between the respective interim position and the respective target position or starting position and the orientation and ii) the time delay are determined and provided for later adjusting processes.

5. Method according to claim 4, **characterised in that** the parameter ($f_{mess}$) characterising the current operating state of the unit of actuator and element can be measured, and **in that** i) the distance between the respective interim position and the respective target position or starting position and the orientation and ii) the time delay relative to the parameter ($f_{mess}$) characterising the current operating state of the unit of actuator and element (1) are provided for later adjusting processes.

6. Method according to claim 5, **characterised in that** the current operating state is determined by measuring the parameter characterising the current operating state of the unit of actuator and element (1), and i) the distance between the respective interim position and the respective target position or starting position and the orientation and ii) the time delay, which are assigned to the measured parameter, are determined or selected for an adjusting difference corresponding to a distance between a target position and a starting position.

7. Method according to claim 5 or 6, **characterised in that** the measurable parameter or parameter to be measured comprises an oscillation frequency ($f_{mess}$) of the unit of actuator and element (1).

8. Method according to any one of claims 5 to 7, **characterised in that** the measurable parameter or parameter to be measured is measured or can be measured by measuring at least one variable from a response, in particular a step response, of the unit of actuator and element (1) to stimulation, in particular a jerky or impulse-like stimulation.

9. Method according to any one of claims 1 to 8, at least also dependent on claim 4, **characterised in that** for a predefined set of charging masses (7) differing at least partly with respect to the inertia mass at least for a subset of the possible combination charging of the element (1) relative to at least one, preferably several adjusting differences between at least one, preferably several starting positions and at least one, preferably several target positions i) the distance between the respective interim position and the respective target position or starting position and the orientation and ii) the time delay are determined and provided for later adjustment processes.

10. Method according to any one of claims 1 to 9, **characterised in that** the element (1) can be adjusted by means of the actuator along a preferably linear guiding path.

11. Method according to any one of claims 1 to 9, **characterised in that** the element (1) can be rotated by means of the actuator about an axis of rotation or pivoted about a pivot axis.

12. Method according to any one of claims 1 to 11, **characterised in that** the actuator comprises a starting member coupled by movement directly or indirectly to the element (1), adjustable linearly relative to an actuator base which can be driven on an electromagnetic path.

13. Method according to any one of claims 1 to 11, **characterised in that** the actuator comprises a starting member which is coupled by movement with the element (1) directly or indirectly, and is rotatably relative to an actuator base about an axis of rotation and can be driven on electromagnetic paths.

14. Method according to any one of claims 1 to 13, **characterised in that** the actuator is configured as an electromagnetic or galvanometer-actuator.

15. Method according to any one of claims 1 to 14, **characterised in that** the actuator is configured as a stepping motor.

16. Method according to any one of claims 1 to 15, **characterised in that** the element is configured as a filter holder (1) holding a plurality of optical filters and the adjustment of the element is performed by means of the actuator in order to switch between a plurality of optical filters (7) held by the filter holder.

17. Method according to claim 16, **characterised in that** the optical filters (7) can be replaced.

18. Method according to claim 17, **characterised in that** the optical filters (7) form the charging masses.

19. Device for adjusting an element (1), in particular for performing the method according to at least one of the preceding claims, comprising:

- an actuator which comprises a starting member movement-coupled directly or indirectly to the element;
- a control unit for activating the actuator, in order adjust the element in a defined manner between a plurality of discrete adjusting positions and/or continually within an adjusting range,

wherein the element (1) in cooperation with the actuator following an input of energy can perform an oscillation about a middle position corresponding to a current reference position of the element and adjustable by the actuator, and

wherein the control unit is configured and/or programmed to activate the actuator for an adjustment of the element from a starting position to a target position, such that

- the element (1) relative to the middle position is adjusted firstly into an interim position adjacent to the target position which is between the starting position and the target position or beyond the target position and
- once the interim position has been reached - with a defined time delay (r) the element (1) is adjusted relative to the middle position from the interim position into the target position such that energy is removed from an oscillation of the element about the current middle position as result of the adjustment of the element from the starting position into the interim position,

**characterised in that**
an operating state of the unit of actuator and element (1) can be changed by charging at least one, preferably a plurality of charging masses (7) to be carried by the element (1) during the adjustment on the element (1) or by changing a current charge on the element (1) by removing or replacing or additionally charging at least one charging mass (7), and **in that** the control unit is configured and/or programmed to determine the interim position and the time delay (r) as a function of the operating state.

20. Device according to claim 19, **characterised in that** data are contained in a memory integrated into or assigned to the control unit and **in that** the control unit is set up or programmed to determine directly or indirectly from said data i) the interim position or the distance between the interim position and the target position or the distance between the starting position and the interim position and an orientation which indicates whether the interim position is between the starting position and the target position or beyond the target position and ii) the time delay (r), on the basis of an operating state corresponding to a current additional charge or operating states corresponding to different additional charges or at least one parameter ($f_{mess}$) characterising the current operating state of the unit of actuator and element (1).

21. Device according to claim 20, **characterised in that** at least one sensor is provided, by means of which the parameter ($f_{mess}$) characterising the current operating state of the unit of actuator and element (1) can be measured and **in that** the control unit is set up or programmed on the basis of the measured parameter to determine or select from the data i) the distance between the respective interim position and the respective target position or starting position and the orientation and ii) the time delay, which are assigned to the measured parameter, at least for an adjusting difference corresponding to a distance between a target position and a starting position.

22. Device according to any one of claims 19 to 21, **characterised in that** the element is configured as a filter holder, preferably a filter wheel (1), with a plurality of optical filters or for a plurality of preferably, replaceable optical filters (7).

23. Device according to any one of claims 19 to 22, **characterised by** the features of the device referred to in at least one of the method claims 1 to 18.

24. Device according to any one of claims 19 to 23, **characterised in that** the control unit is set up or programmed to perform the method steps according to at least one of the method claims 1 to 18, insofar as they are relevant in cooperation with the actuator or the element (1) or the sensor.

**Revendications**

1. Procédé de réglage d'un élément (1) au moyen d'un actionneur, qui est conçu pour régler de façon définie, sur la base d'une commande correspondante émise par une unité de commande, l'élément entre une pluralité de positions de réglage discrètes et/ou de manière continue à l'intérieur d'une plage de réglage,
dans lequel l'élément (1) peut exécuter, en coopération avec l'actionneur à la suite d'un apport d'énergie, une oscillation autour d'une position moyenne réglable par l'actionneur et correspondant à une position de consigne momentanée de l'élément, dans lequel l'unité de commande active l'actionneur pour un réglage de l'élément d'une position initiale à une position visée, de telle manière que

- l'élément (1) soit réglé, par rapport à la position moyenne, d'abord dans une position provisoire proche de la position visée, qui est située entre la position initiale et la position visée ou de l'autre côté de la position visée, et que
- après que la position provisoire ait été atteinte
- l'élément (1) soit réglé par rapport à la position moyenne, avec un retard temporel défini ($\tau$), de la position provisoire à la position visée, de telle manière que de l'énergie soit retirée à une oscillation de l'élément autour de la position moyenne momentanée à la suite du réglage de l'élément de la position initiale à la position provisoire et/ou à la suite d'un autre apport d'énergie,

**caractérisé en ce que**
un état de fonctionnement de l'unité composée de l'actionneur et de l'élément est modifié par le chargement d'au moins une, de préférence de plusieurs masses de chargement (7) à emporter par l'élément (1) lors du réglage sur l'élément (1) ou par changement d'une charge momentanée sur l'élément par enlèvement ou échange ou chargement d'au moins une masse de chargement, et **en ce que**
l'unité de commande détermine la position provisoire et le retard temporel ($\tau$) en fonction de l'état de fonctionnement.

2. Procédé selon la revendication 1, **caractérisé en ce que** l'unité de commande active l'actionneur de telle manière que l'élément (1) soit réglé par sauts de la position provisoire à la position visée essentiellement au moment où un maximum d'oscillation correspondant à une déviation maximale momentanée de l'élément (1) hors de la position moyenne est atteint.

3. Procédé selon la revendication 2, **caractérisé en ce que** i) la position provisoire ou la distance ($\Delta N$) entre la position provisoire et la position visée ou la distance ($N_{cons}$) entre la position initiale et la position provisoire et une orientation, qui indique si la position provisoire est située entre la position initiale et la position visée ou de l'autre côté de la position visée, ainsi que ii) le retard temporel ($\tau$) sont déterminés sur la base d'un état de fonctionnement correspondant à une charge momentanée ou d'états de fonctionnement correspondant à des charges différentes prévues ou d'au moins un paramètre ($f_{mes}$) caractérisant l'état de fonctionnement momentané de l'unité composée de l'actionneur et de l'élément (1), au moyen d'un modèle mathématique de l'unité composée de l'actionneur et de l'élément (1) ou expérimentalement ou à partir de données antérieures retenues.

4. Procédé selon la revendication 3, **caractérisé en ce que**, pour une série de charges prévues par rapport à au moins une, de préférence plusieurs différences de réglage entre au moins une, de préférence plusieurs positions initiales prévues et au moins une, de préférence plusieurs positions visées prévues, i) la distance entre la position provisoire respective et la position visée ou la position initiale respective et l'orientation ainsi que ii) le retard temporel sont déterminés et préparés pour des opérations de réglage ultérieures.

5. Procédé selon la revendication 4, **caractérisé en ce que** le paramètre ($f_{mes}$) caractérisant l'état de fonctionnement momentané de l'unité composée de l'actionneur et de l'élément est mesurable, et **en ce que** i) la distance entre la position provisoire respective et la position visée ou la position initiale respective et l'orientation et ii) le retard temporel, chaque fois par rapport au paramètre ($f_{mes}$) caractérisant l'état de fonctionnement momentané de l'unité composée de l'actionneur et de l'élément (1), sont préparés pour des opérations de réglage ultérieures.

6. Procédé selon la revendication 5, **caractérisé en ce que** l'état de fonctionnement momentané est déterminé par la mesure du paramètre caractérisant l'état de fonctionnement momentané de l'unité composée de l'actionneur et de l'élément (1) et i) la distance entre la position provisoire respective et la position visée ou la position initiale respective et l'orientation et ii) le retard temporel, qui sont associés au paramètre mesuré, sont déterminés ou sélectionnés au moins pour une différence de réglage correspondant à une distance entre une position visée et une position initiale.

7. Procédé selon la revendication 5 ou 6, **caractérisé en ce que** le paramètre mesurable ou à mesurer comprend une fréquence d'oscillation ($f_{mes}$) de l'unité composée de l'actionneur et de l'élément (1).

8. Procédé selon l'une quelconque des revendications 5 à 7, **caractérisé en ce que** le paramètre mesurable ou à mesurer est mesuré ou est mesurable par la mesure d'au moins une grandeur à partir d'une réponse, en particulier une réponse de saut, de l'unité composée de l'actionneur et de l'élément (1) à une excitation, en particulier une excitation par sauts ou par impulsions.

**9.** Procédé selon l'une quelconque des revendications 1 à 8, au moins aussi reliée à la revendication 4, **caractérisé en ce que** i) la distance entre la position provisoire respective et la position visée ou la position initiale respective et l'orientation ainsi que ii) le retard temporel sont déterminés pour un ensemble prédéterminé de masses de chargement (7) différentes au moins en partie en ce qui concerne la masse d'inertie au moins pour un sous-ensemble des charges à combiner possibles de l'élément (1) par rapport à au moins une, de préférence plusieurs différences de réglage entre au moins une, de préférence plusieurs positions initiales prévues et au moins une, de préférence plusieurs positions visées prévues et sont préparés pour des opérations de réglage ultérieures.

**10.** Procédé selon l'une quelconque des revendications 1 à 9, **caractérisé en ce que** l'élément (1) est réglable au moyen de l'actionneur le long d'une zone de guidage de préférence linéaire.

**11.** Procédé selon l'une quelconque des revendications 1 à 9, **caractérisé en ce que** l'élément (1) peut tourner autour d'un axe de rotation ou peut pivoter autour d'un axe de pivotement au moyen de l'actionneur.

**12.** Procédé selon l'une quelconque des revendications 1 à 11, **caractérisé en ce que** l'actionneur présente un organe de sortie couplé en mouvement directement ou indirectement à l'élément (1), réglable linéairement par rapport à une base de l'actionneur et pouvant être entraîné par voie électromagnétique.

**13.** Procédé selon l'une quelconque des revendications 1 à 11, **caractérisé en ce que** l'actionneur présente un organe de sortie couplé en mouvement directement ou indirectement à l'élément (1), pouvant tourner autour d'un axe de rotation par rapport à une base de l'actionneur et pouvant être entraîné par voie électromagnétique.

**14.** Procédé selon l'une quelconque des revendications 1 à 13, **caractérisé en ce que** l'actionneur est réalisé sous la forme d'un actionneur électromagnétique ou d'un actionneur galvanométrique.

**15.** Procédé selon l'une quelconque des revendications 1 à 14, **caractérisé en ce que** l'actionneur est réalisé sous la forme d'un moteur pas à pas.

**16.** Procédé selon l'une quelconque des revendications 1 à 15, **caractérisé en ce que** l'élément est réalisé sous la forme d'un porte-filtre (1) portant plusieurs filtres optiques, et le réglage de l'élément est effectué au moyen de l'actionneur, afin de commuter plusieurs filtres optiques (7) portés par le porte-filtre.

**17.** Procédé selon la revendication 16, **caractérisé en ce que** les filtres optiques (7) sont remplaçables.

**18.** Procédé selon la revendication 17, **caractérisé en ce que** les filtres optiques (7) forment les masses de chargement.

**19.** Dispositif de réglage d'un élément (1), en particulier pour la mise en oeuvre du procédé selon au moins une des revendications précédentes, comprenant:

- un actionneur, qui présente un organe de sortie couplé en mouvement directement ou indirectement à l'élément;
- une unité de commande pour commander l'actionneur, afin de régler l'élément de façon définie entre une pluralité de positions de réglage discrètes et/ou de façon continue à l'intérieur d'une plage de réglage, dans lequel l'élément (1) peut exécuter, en coopération avec l'actionneur à la suite d'un apport d'énergie, une oscillation autour d'une position moyenne réglable par l'actionneur et correspondant à une position de consigne momentanée de l'élément, et

dans lequel l'unité de commande est conçue et/ou programmée pour activer l'actionneur pour un réglage de l'élément d'une position initiale à une position visée, de telle manière que

- l'élément (1) soit réglé, par rapport à la position moyenne, d'abord dans une position provisoire proche de la position visée, qui est située entre la position initiale et la position visée ou de l'autre côté de la position visée, et que
- après que la position provisoire ait été atteinte
- l'élément (1) soit réglé par rapport à la position moyenne, avec un retard temporel défini ($\tau$), de la position provisoire à la position visée, de telle manière que de l'énergie soit retirée à une oscillation de l'élément autour de la position moyenne momentanée à la suite du réglage de l'élément de la position initiale à la position provisoire,

**caractérisé en ce que**
un état de fonctionnement de l'unité composée de l'actionneur et de l'élément (1) peut être modifié par le chargement d'au moins une, de préférence de plusieurs masses de chargement (7) à emporter par l'élément (1) lors du réglage sur l'élément (1) ou par changement d'une charge momentanée sur l'élément (1) par enlèvement ou échange ou chargement d'au moins une masse de chargement (7), et **en ce que**
l'unité de commande est conçue et/ou programmée pour déterminer la position provisoire et le retard temporel ($\tau$) en fonction de l'état de fonctionnement.

**20.** Dispositif selon la revendication 19" **caractérisé en ce que** des données sont contenues dans une mémoire intégrée dans ou associée à l'unité de commande, et **en ce que** l'unité de commande est conçue ou programmée pour déterminer directement ou indirectement à partir de ces données i) la position provisoire ou la distance entre la position provisoire et la position visée ou la distance entre la position initiale et la position provisoire et une orientation, qui indique si la position provisoire est située entre la position initiale et la position visée ou de l'autre côté de la position visée, ainsi que ii) le retard temporel ($\tau$), sur la base d'un état de fonctionnement correspondant à une charge momentanée ou d'états de fonctionnement correspondant à des charges différentes prévues ou d'au moins un paramètre ($f_{mes}$) caractérisant l'état de fonctionnement momentané de l'unité composée de l'actionneur et de l'élément (1).

**21.** Dispositif selon la revendication 20, **caractérisé en ce qu'**il est prévu au moins un capteur, au moyen duquel le paramètre ($f_{mes}$) caractérisant l'état de fonctionnement momentané de l'unité composée de l'actionneur et de l'élément (1) peut être mesuré, et **en ce que** l'unité de commande est conçue ou programmée pour déterminer ou sélectionner à partir des données, sur la base du paramètre mesuré, i) la distance entre la position provisoire respective et la position visée ou la position initiale respective et l'orientation et ii) le retard temporel, qui sont associés au paramètre mesuré, au moins pour une différence de réglage correspondant à une distance entre une position visée et une position initiale.

**22.** Dispositif selon l'une quelconque des revendications 19 à 21, **caractérisé en ce que** l'élément est réalisé sous la forme d'un porte-filtre, de préférence d'une roue de filtres (1), avec plusieurs filtres optiques ou pour plusieurs filtres optiques (7) de préférence remplaçables.

**23.** Dispositif selon l'une quelconque des revendications 19 à 22, **caractérisé par** les caractéristiques de dispositif revendiquées dans au moins une des revendications de procédé 1 à 18.

**24.** Dispositif selon l'une quelconque des revendications 19 à 23, **caractérisé en ce que** l'unité de commande est conçue ou programmée pour exécuter les étapes de procédé selon au moins une des revendications de procédé 1 à 18, dans la mesure où cela est compatible avec une coopération avec l'actionneur ou l'élément (1) ou le capteur.

FIG. 1

**ABBILDUNG 2**

Nm

0.2

0.1

-0.1

-0.2

Grad

-3  -2  -1  1  2  3

Abbildung 2: Rückstellendes Drehmoment $M$ in $Nm$ in Abhängigkeit von der Auslenkung aus der Solllage $\Phi_{ist}$-$\Phi_{soll}$ - Messung am Beispiel des in MT20 verwendeten Schrittmotors bei einem Strom von 1.4A.

Grad

**ABBILDUNG 3**

2

1.5

1

0.5

uStep

2  4  6  8  10

Abbildung 3: $\Theta(N)$ – Funktion zur Berechnung des der Winkelposition $\Phi_{soll}$ aus der $\mu$-Schritt-Position $N_{soll}$, welche durch die Bestromung des Motors vorgegeben wird.

# FIG. 2

GLEICHUNG 1:

$$(I_{Filter} + I_{HW})\frac{d^2}{dt^2}\Phi(t) + \beta\frac{d}{dt}\Phi(t) = -M\left(\Phi(t) - \Phi_{soll}\right)$$

GLEICHUNG 2:

$$\left[\frac{d}{dt}\Phi\right]_{t=0} = 0 \qquad \text{und} \qquad [\Phi]_{t=0} = \Phi_{ist}$$

GLEICHUNG 3:

$$(I_{Filter} + I_{HW})\frac{d^2}{dt^2}\Phi(t) + \beta\frac{d}{dt}\Phi(t) = -M\left(\Phi(t) - \Theta\left(N_{soll}(t)\right)\right)$$

GLEICHUNG 3a:

$$(\frac{d^2}{dt^2}\Phi(t) > 0)$$

GLEICHUNG 3b:

$$\frac{d^2}{dt^2}\Phi(t) < 0$$

FIG. 3

ABBILDUNG 4

Abbildung 4: Typische Geschwindgkeitsrampe $\frac{d}{dt} N_{soll}(t)$, wie sie von Motorcontrollern erzeugt wird (links). Die Zahlenwerte entsprechen dem Weiterschalten des Filterrades in MT20 um eine Position. Rechts ist die zugehörige zeitabhängige $\mu$-Schritt-Position $N_{soll}(t)$ gezeigt.

FIG. 4

ABBILDUNG 5

Abbildung 5: Gelöste Bewegungsgleichung (Gl. 3) für den Fall des Weiterschaltens um eine Filterposition im MT20 ($N_{soll}(t)$) siehe Abbildung 4). Links die Phase des „Anfahrens" und rechts der gesamte Wechselvorgang mit deutlich erkennbarem Nachschwingen.

FIG. 5

ABBILDUNG 6

Abbildung 6: Links: Detailansicht des Endes der Verzögerungsphase: Mechanik läuft über
das Ziel hinaus und schwingt nach. Rechts: Vermeidung der Schwingung durch
nachsetzen von $N_{soll}$ im Umkehrpunkt nach 100 ms.

FIG. 6

EP 1 606 675 B1

ABBILDUNG 7

Abbildung 7: Detailansicht des Endes der Verzögerungsphase beim Bewegen des Filterrades
um 60°. Links entsprechend einer Zuladung von einem Filter, rechts mit einer
Zuladung, die drei Filtern entspricht.

FIG. 7

EP 1 606 675 B1

TABELLE 1

| Zuladung→ | ... | $0.0000015\,kg\,m^2$ | | | ... | $0.0000025\,kg\,m^2$ | | | ... | $0.0000035\,kg\,m^2$ | | | ... |
|---|---|---|---|---|---|---|---|---|---|---|---|---|---|
| $N_{soll}$ ↓ | ... | f | $\Delta N$ | $\tau$ | ... | f | $\Delta N$ | $\tau$ | ... | f | $\Delta N$ | $\tau$ | ... |
| ... | | | ... | | | | ... | | | | ... | | |
| 260 μ-Steps | | | | | | | | | | | | | |
| 261 μ-Steps | | | | | | | | | | | | | |
| 262 μ-Steps | | | | | | 59.0 | 4.3 | 6.4 | | | | | |
| 263 μ-Steps | | 75.8 | -2.6 | 10.8 | | | | | | | | | |
| 264 μ-Steps | | | | | | | | | | 49.7 | 2.6 | 12.9 | |
| 265 μ-Steps | | | | | | | | | | | | | |
| 266 μ-Steps | ... | | | | ... | 58.7 | 3.9 | 23.3 | ... | | | | ... |
| 267 μ-Steps | | | | | | | | | | | | | |
| 268 μ-Steps | | | | | | | | | | | | | |
| 269 μ-Steps | | 75.6 | -3.2 | 11.0 | | | | | | 49.6 | -2.7 | 31.7 | |
| 270 μ-Steps | | 75.7 | -3.3 | 10.6 | | 58.4 | -4.0 | 23.2 | | 49.7 | -2.8 | 32.1 | |
| 271 μ-Steps | | | | | | | | | | | | | |
| ... | | | ... | | | | ... | | | | ... | | |

Tabelle 1: Tabelle mit einigen berechneten Werten am Beispiel von MT20. Es können beliebige Zwischenwerte für $N_{soll}$ und die Zuladung berechnet werden. Der Einfachheit halber wurden nur wenige, aber relevante (i.e. $\Delta N + N_{soll} \approx$ Zielposition) für den Fall des Weiterfahrens um eine Filterposition aufgetragen. $\tau$ in ms, $\Delta N$ in μ-Steps und $f$ in Hz.

TABELLE 2

| $f_{mess}$ → | ... | 76 Hz | | | ... | 59 Hz | | | ... | 50 Hz | | | ... |
|---|---|---|---|---|---|---|---|---|---|---|---|---|---|
| Zielposition ↓ | ... | $N_{soll}$ | $\Delta N$ | $\tau$ | ... | $N_{soll}$ | $\Delta N$ | $\tau$ | ... | $N_{soll}$ | $\Delta N$ | $\tau$ | ... |
| ... | | | | | | | | | | | | | |
| 267 μ-Steps | ... | 270 | -3 | 10.6ms | ... | 262 | +5 | 6.4ms | ... | 264 | 3 | 12.9 | ... |
| ... | | | | | | | | | | | | | |

Tabelle 2: Beispiel-Tabelle durch auswählen geeigneter Elemente aus Tabelle 1 für das Weiterfahren um eine Filterposition. Für die Zielfahrweiten können in Anhängigkeit von der experimentell in der Kalibrierungsroutine gemessenen Frequenz die Werte für $N_{soll}$, $\Delta N$ und $\tau$ durch einfaches nachsehen entnommen werden. Bei der Auswahl der Werte aus Tabelle 1 besteht grundsätzlich die Möglichkeit zwischen den verschiedenen Punkten an denen die Mechanik in Ruhe ist zu wählen, aber man wird i.d.R. den frühest möglichen bevorzugen.

FIG. 8

ABBILDUNG 8

Abbildung 8: Numerische Lösung des Beispiels „Anker auslenken und loslassen" für zwei
verschieden große Auslenkungen. Links: 7°, Rechts 3°. Deutlich ist Links der
anharmonische Charakter erkennbar: niedrigere Frequenz bei großer Amplitude.

FIG. 9

ABBILDUNG 9

Filterrad-Daempfung, leer, b=-0.0183097(1/ms), p=13.5ms

Abbildung 9: Beobachtet wurde mit einer Photodiode die Position der Umpehrpunkte der Schwingung (blau: Messwerte für den oberen Umkehrpunkt, rot: für den unteren) sowie Anpassungskurven zur Ermittlung der Dämpfungskonstante. Es genügt zur Bestimmung der Dämpfung, die y-Achse in willkürlichen Einheiten zu haben.

FIG. 10

EP 1 606 675 B1

FIG. 11

a) **Geschwindigkeit**

Zeit

b) **Position**

Zeit

FIG. 12

a)

V

Situation 1

b)

V=0

Situation 2

FIG. 13

a)

X

Situation 3

b)

X

Situation 4

FIG. 14

FIG. 15

FIG. 16

**IN DER BESCHREIBUNG AUFGEFÜHRTE DOKUMENTE**

**In der Beschreibung aufgeführte Patentdokumente**

- DE 10005611 A1
- WO 0159531 A2
- JP 59188395 A
- US 4782277 A
- US 6285155 B1
- DE 10244720
- DE 10310603